(19) Europäisches Patentamt
European Patent Office
Office européen des brevets

(11) **EP 4 317 250 A1**

(12) **EUROPEAN PATENT APPLICATION**
published in accordance with Art. 153(4) EPC

(43) Date of publication:
**07.02.2024 Bulletin 2024/06**

(21) Application number: **22774928.0**

(22) Date of filing: **28.02.2022**

(51) International Patent Classification (IPC):
***C08G 64/20*** *(2006.01)*

(52) Cooperative Patent Classification (CPC):
**C08G 64/20**

(86) International application number:
**PCT/JP2022/008358**

(87) International publication number:
**WO 2022/202130 (29.09.2022 Gazette 2022/39)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **26.03.2021 JP 2021053222**

(71) Applicant: **Asahi Kasei Kabushiki Kaisha**
**Tokyo 1000006 (JP)**

(72) Inventors:
- **SHIGA, Yusuke**
  **Tokyo 100-0006 (JP)**
- **NAMBA, Nobutsugu**
  **Tokyo 100-0006 (JP)**

(74) Representative: **Strehl Schübel-Hopf & Partner**
**Maximilianstrasse 54**
**80538 München (DE)**

# (54) METHOD FOR ASSEMBLING POLYCARBONATE PRODUCTION APPARATUS, AND POLYCARBONATE PRODUCTION APPARATUS

(57) A method for assembling a polycarbonate manufacturing apparatus comprising a plurality of apparatus elements, the method comprising:
protecting an opening of each apparatus element, wherein the apparatus element is prepared as follows: at least a portion of a metal surface that comes into contact with an internal fluid of the apparatus element is polished with an abrasive corresponding to buff #400, and the polished metal surface is washed until becoming a state where no dirt is attached to a nonwoven fabric in a test of contact between the metal surface and the nonwoven fabric; and connecting the opening of the apparatus element to the opening of another apparatus element within a dust cover.

[Figure 5]

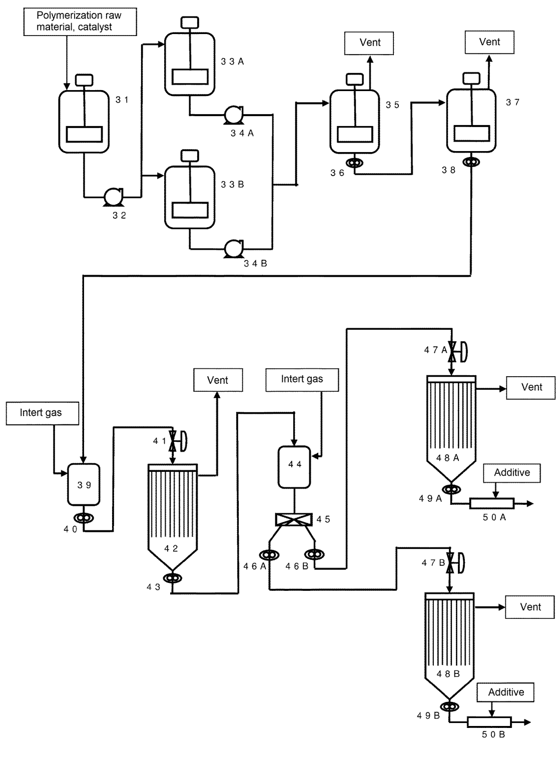


EP 4 317 250 A1

## Description

### Technical Field

The present invention relates to a method for assembling a polycarbonate manufacturing apparatus and a polycarbonate manufacturing apparatus.

### Background Art

For example, a technique using stainless polished with buff #200 or less as a material of an internal wall face of a manufacturing apparatus (see, for example, Patent Literature 1), a technique of setting surface roughness degree Rmax of at least a portion of an internal wall face of a stainless piping through which a melted polymer passes to 5 μm or less (see, for example, Patent Literature 2), and a technique using a container and/or a piping having a surface roughness degree of 10 μm or less at a liquid contact part (see, for example, Patent Literature 3) have heretofore been disclosed as to polycarbonate manufacturing apparatuses.
On the other hand, a problem of each of the patent literatures mentioned above is a lack of disclosure about the optimization of a method for assembling a polycarbonate manufacturing apparatus.
Also, the buff finishing of metal surfaces of a piping and device, the setting of surface roughness degrees of the metal surfaces to 50 μm or less, preferably 10 μm or less, and washing with one or more members selected from the group consisting of a drug, hot water, a dilute alkali, an aromatic monohydroxy compound, diaryl carbonate, and a melted mixture of an aromatic dihydroxy compound and diaryl carbonate in order to remove dirt, an oil, and a reaction inhibitor (e.g., an acid) attached to the metal surfaces of a piping and device and adsorbed oxygen on the metal surfaces (see, for example, Patent Literature 4) have heretofore been disclosed.

### Citation List

### Patent Literature

Patent Literature 1: Japanese Patent Laid-Open No. 4-7328
Patent Literature 2: Japanese Patent No. 3224434
Patent Literature 3: Japanese Patent No. 4255548
Patent Literature 4: Japanese Patent No. 6554012

### Summary of Invention

### Technical Problem

None of Patent Literatures 1 to 4, however, disclose the optimization of a method for assembling a polycarbonate manufacturing apparatus by any means, and the heretofore disclosed polycarbonate manufacturing apparatuses are disadvantageously susceptible to improvement from the viewpoint of obtaining high-quality and high-performance polycarbonate unlikely to be stained and to contain a foreign matter.
Accordingly, an object of the present invention is to provide a method for assembling a polycarbonate manufacturing apparatus and a polycarbonate manufacturing apparatus which produce high-quality and high-performance polycarbonate unlikely to be stained and to contain a foreign matter.

### Solution to Problem

The present inventors have conducted diligent studies in light of the problems of the conventional techniques mentioned above, and consequently completed the present invention by finding that the problems of the conventional techniques mentioned above can be solved by optimizing a method for assembling a polycarbonate manufacturing apparatus, and specifying the structure of a polycarbonate manufacturing apparatus.
Specifically, the present invention is as follows.

[1] A method for assembling a polycarbonate manufacturing apparatus comprising a plurality of apparatus elements, in which the method comprising:

protecting an opening of each apparatus element,
wherein the apparatus element is prepared by:

polishing at least a portion of a metal surface that comes into contact with an internal fluid of the apparatus element with an abrasive corresponding to buff #400, and
washing the polished metal surface until becoming a state where no dirt is attached to a nonwoven fabric in a test of contact between the metal surface and the nonwoven fabric; and

connecting the opening of the apparatus element to the opening of another apparatus element within a dust cover.

[2] A polycarbonate manufacturing apparatus, wherein at least a portion of a metal surface that comes into contact with an internal fluid has an arithmetic average roughness (Ra) of 0.25 $\mu$m or less.
[3] The polycarbonate manufacturing apparatus according to [2], wherein
the inside of the polycarbonate manufacturing apparatus is washed with an aqueous solution of alkali metal hydroxide so that a total value of a sulfate ion ($SO_4^{2-}$) concentration and a fluoride ion (F-) concentration in the aqueous solution removed from the inside of the polycarbonate manufacturing apparatus is 150 ppb or less.
[4] The polycarbonate manufacturing apparatus according to [3], wherein
the inside of the polycarbonate manufacturing apparatus is washed with an aromatic monohydroxy compound after washing with the aqueous solution of alkali metal hydroxide so that difference between "absorbance at 400 nm" and "absorbance at 700 nm" of the aromatic monohydroxy compound removed from the inside of the polycarbonate manufacturing apparatus is 0.002 or less.
[5] The polycarbonate manufacturing apparatus according to any one of [2] to [4], wherein

the polycarbonate manufacturing apparatus has a guide-contact flow-down type polymerization apparatus that allows a polycarbonate prepolymer to flow down along an external surface of a guide having no heating source in itself, while evaporating a low-boiling substance, wherein
the guide-contact flow-down type polymerization apparatus satisfies the following <condition (1)> to <condition (9)>:

<condition (1)>
having: a liquid feed port; a liquid supply zone for supplying a liquid to a guide of an evaporation zone through a porous plate; the evaporation zone provided with a plurality of guides extending downward from the porous plate in a space surrounded by the porous plate, a side casing, and a bottom casing; a vacuum vent disposed in the evaporation zone; and a liquid discharge port disposed in a lowermost part of the bottom casing;
<condition (2)>
a flow path control component having a function by which a liquid to be supplied from the liquid feed port to the porous plate flows in a direction from a peripheral part of the porous plate toward a central part in the liquid supply zone is placed in the liquid supply zone;
<condition (3)>
internal cross-sectional area A ($m^2$) on a horizontal plane of the side casing of the evaporation zone satisfies the following formula (I):

$$0.7 \leq A \leq 300 \quad \text{formula (I);}$$

<condition (4)>
a ratio between the internal cross-sectional area A ($m^2$) and internal cross-sectional area B ($m^2$) on a horizontal plane of the liquid discharge port satisfies the following formula (II):

$$20 \leq A/B \leq 1000 \quad \text{formula (II);}$$

<condition (5)>
the bottom casing constituting the bottom of the evaporation zone is connected to the upper side casing at an angle of C degrees with respect to the inside thereof, wherein the angle of C degrees (°) satisfies the following formula (III):

$$110 \leq C \leq 165 \quad \text{formula (III);}$$

<condition (6)>
length h (cm) of the guide satisfies the following formula (IV):

$$150 \leq h \leq 5000 \quad \text{formula (IV);}$$

<condition (7)>
total external surface area S ($m^2$) of all the plurality of guides satisfies the following formula (V):

$$2 \leq S \leq 50000 \quad \text{formula (V);}$$

<condition (8)>
average number N of pores per $m^2$ of the porous plate (number/$m^2$) satisfies the following formula (VI):

$$50 \leq N \leq 3000 \quad \text{formula (VI);}$$

and
<condition (9)>
a ratio between upper area T ($m^2$) of the porous plate including upper areas of the pores of the porous plate and total effective cross-sectional area Q ($m^2$) of the pores satisfies the following formula (VII):

$$50 \leq T/Q \leq 3000 \quad \text{formula (VII).}$$

[6] The polycarbonate manufacturing apparatus according to [5], wherein the amount of the liquid subjected to evaporation treatment is 1 or more ton per hour.
[7] The polycarbonate manufacturing apparatus according to [5] or [6], wherein
angle E (°) formed by an internal sidewall face of the liquid supply zone and the porous plate satisfies the following formula (VIII):

$$100 \leq E < 180 \quad \text{formula (VIII).}$$

[8] The polycarbonate manufacturing apparatus according to any one of [5] to [7], wherein
distance K (cm) between the guide closest to an internal wall face of the side casing of the evaporation zone and the internal wall face satisfies the following formula (IX):

$$5 \leq K \leq 50 \quad \text{formula (IX).}$$

[9] The polycarbonate manufacturing apparatus according to any one of [5] to [8], wherein

the side casing of the evaporation zone is in a cylindrical shape with internal diameter D (cm) and length L (cm), the bottom casing connected to an underpart of the side casing is in a cone shape, and the liquid discharge port at the lowermost part of the bottom casing in a cone shape is in a cylindrical shape with internal diameter d (cm), wherein
D, L, and d satisfy the following formulas (X), (XI), (XII), and (XIII):

$$100 \leq D \leq 1800 \quad \text{formula (X)}$$

$$5 \leq D/d \leq 50 \quad \text{formula (XI)}$$

$$0.5 \leq L/D \leq 30 \quad \text{formula (XII))}$$

$$h - 20 \leq L \leq h + 300 \quad \text{formula (XIII)}$$

wherein in the formula (XIII), h (cm) represents the length of the guide.

[10] The polycarbonate manufacturing apparatus according to any one of [5] to [9], wherein space volume V ($m^3$) where a liquid can exist in the liquid supply zone from the liquid feed port to an upper face of the porous plate, and upper area T ($m^2$) of the porous plate including upper areas of the pores of the porous plate satisfy the following formula (XIV):

$$0.02 \text{ (m)} \leq V/T \leq 0.5 \text{ (m)} \quad \text{formula (XIV).}$$

[11] The polycarbonate manufacturing apparatus according to any one of [5] to [10], wherein

at least one of the guides is in a columnar form with external diameter r (cm), or in a pipe form that inhibits a liquid and/or a gaseous substance from entering the inside, wherein
the external diameter r satisfies the following formula (XV):

$$0.1 \leq r \leq 1 \quad \text{formula (XV).}$$

[12] The polycarbonate manufacturing apparatus according to any one of [5] to [11], wherein the polycarbonate manufacturing apparatus has the plurality of guides, and the plurality of guides are joined through a supporting material.
[13] The polycarbonate manufacturing apparatus according to [12], wherein

the plurality of guides are selected from the group consisting of
grid-like or net-like guides in which the individual guides are fixed through a transverse supporting material, steric guides in which a plurality of grid-like or net-like guides are anteroposteriorly arranged and fixed through a transverse supporting material, and jungle gym-like steric guides in which a plurality of individual guides are anteroposteriorly and laterally fixed through a transverse supporting material.

[14] The polycarbonate manufacturing apparatus according to any one of [5] to [13], wherein

the guide-contact flow-down type polymerization apparatus is further connected with at least one guide-contact flow-down type polymerization apparatus that satisfies the <condition (1)> to <condition (9)>, wherein
the two or more guide-contact flow-down type polymerization apparatuses are connected in series, in parallel, or both in series and in parallel.

[15] The polycarbonate manufacturing apparatus according to [14], wherein

the guide-contact flow-down type polymerization apparatus is further connected with one guide-contact flow-down type polymerization apparatus, wherein
total external surface area S1 ($m^2$) of the guides of the guide-contact flow-down type polymerization apparatus, and
total external surface area S2 ($m^2$) of the guides of the further connected guide-contact flow-down type polymerization apparatus
satisfy the following formula (XVI):

$$1 \leq S1/S2 \leq 20 \ldots \text{formula (XVI).}$$

[16] The polycarbonate manufacturing apparatus according to any one of [5] to [15], wherein

the polycarbonate manufacturing apparatus further has an inert gas absorption apparatus for allowing an inert gas to be absorbed to a melted polycarbonate prepolymer before supply to the guide-contact flow-down type polymerization apparatus, wherein
the inert gas-absorbed melted prepolymer is supplied such that a pressure thereof within a melted prepolymer supply piping from the inert gas absorption apparatus to the guide-contact flow-down type polymerization apparatus is kept at 15 kPaA to 200 kPaA by a pressure regulating valve placed immediately before the entrance of the guide-contact flow-down type polymerization apparatus.

[17] The polycarbonate manufacturing apparatus according to [14] or [15], wherein

the guide-contact flow-down type polymerization apparatus and the further connected guide-contact flow-down type polymerization apparatus are each connected with an inert gas absorption apparatus for allowing an inert gas to be absorbed to a melted polycarbonate prepolymer before supply to each of the guide-contact flow-down type polymerization apparatuses, wherein
the inert gas-absorbed melted prepolymer is supplied such that a pressure thereof within a melted prepolymer supply piping from the inert gas absorption apparatus to each of the guide-contact flow-down type polymerization apparatuses is kept at 15 kPaA to 200 kPaA by a pressure regulating valve placed immediately before the entrance of each of the guide-contact flow-down type polymerization apparatuses.

## Advantageous Effects of Invention

The present invention can provide a method for assembling a polycarbonate manufacturing apparatus and a polycarbonate manufacturing apparatus which can manufacture high-quality and high-performance polycarbonate unlikely to be stained and to contain a foreign matter.

## Brief Description of Drawings

[Figure 1] Figure 1 shows a schematic configuration diagram of an inert gas absorption apparatus constituting a polycarbonate manufacturing apparatus.
[Figure 2] Figure 2 shows a schematic configuration diagram of a guide-contact flow-down type polymerization apparatus constituting a polycarbonate manufacturing apparatus.
[Figure 3] Figure 3 shows a schematic configuration diagram of upper parts of an inert gas absorption apparatus and a guide-contact flow-down type polymerization apparatus.
[Figure 4] Figure 4 shows an enlarged schematic configuration diagram of upper parts of an inert gas absorption apparatus and a guide-contact flow-down type polymerization apparatus.
[Figure 5] Figure 5 shows a schematic configuration diagram of one example of the polycarbonate manufacturing apparatus of the present embodiment.

## Description of Embodiments

Hereinafter, the mode for carrying out the present invention (hereinafter, also referred to as the "present embodiment") will be described in detail.
The present invention is not limited by the present embodiment and can be carried out through various changes or modifications without departing from the spirit of the present invention.

[Method for assembling polycarbonate manufacturing apparatus]

The method for assembling a polycarbonate manufacturing apparatus according to the present embodiment is a method for assembling a polycarbonate manufacturing apparatus comprising a plurality of apparatus elements, in which the method comprising:

protecting an opening of each apparatus element,
wherein the apparatus element is prepared by:

polishing at least a portion of a metal surface that comes into contact with an internal fluid of the apparatus element with an abrasive corresponding to buff #400, and

washing the polished metal surface until becoming a state where no dirt is attached to a nonwoven fabric in a test of contact between the metal surface and the nonwoven fabric; and connecting the opening of the apparatus element to the opening of another apparatus element within a dust cover.

The method for assembling a polycarbonate manufacturing apparatus according to the present embodiment produces a polycarbonate manufacturing apparatus that can manufacture high-quality and high-performance polycarbonate unlikely to be stained and to contain a foreign matter.

More specifically, at least a portion of a metal surface that comes into contact with an internal fluid of the polycarbonate manufacturing apparatus is polished with an abrasive corresponding to buff #400, and the metal surface is washed until becoming a state where no dirt is attached to a nonwoven fabric in a test of contact between the metal surface and the nonwoven fabric, whereby the contamination of polycarbonate to be manufactured by minute foreign matter and the formation of a fisheye (gel) in polycarbonate can be suppressed, and furthermore, polycarbonate is prevented from being stained.

An opening of each apparatus element of the polycarbonate manufacturing apparatus is protected, and the opening of the apparatus element of the polycarbonate manufacturing apparatus is connected to the opening of another apparatus element adjacent thereto within a dust cover, whereby contamination by foreign matter at the time of assembly can be prevented, and high-quality and high-performance polycarbonate unlikely to be stained and to contain a foreign matter can be obtained.

The "apparatus element" means an apparatus constituting the polycarbonate manufacturing apparatus, and related components.

Examples of the apparatus element include inert gas absorption apparatuses, guide-contact flow-down type polymerization apparatuses, transfer pumps, supply pumps, and pipings that connect them.

The "internal fluid" means a fluid such as a raw material of polycarbonate or melted polycarbonate to be handled in the polycarbonate manufacturing apparatus.

An apparatus element in which at least a portion of a metal surface that comes into contact with an internal fluid has been polished with an abrasive corresponding to buff #400 is used as the apparatus element according to the present embodiment.

The metal surface to be polished with an abrasive can be at least a portion of the apparatus element and is preferably 90 area% or more, more preferably 95 area% or more, of the metal surface that comes into contact with an internal fluid.

The "metal surface polished with an abrasive corresponding to buff #400" means a metal surface in a state having a shine close to a mirror surface or a slight streak. The metal surface polished with an abrasive corresponding to buff #400 is preferably a metal surface having, for example, an arithmetic average roughness (Ra) of 0.25 μm or less.

The arithmetic average roughness (Ra) is measured by a method mentioned later.

In the present embodiment, the metal surface is washed until becoming a state where no dirt is attached to a nonwoven fabric in a test of contact between the metal surface and the nonwoven fabric. The phrase "no dirt is attached to a nonwoven fabric" means that no visually confirmable dirt is attached when the metal surface is wiped with the nonwoven fabric.

The washing of the metal surface is not particularly limited and can be performed by, for example, drug application, water jet, or application of a water-soluble mineral oil detergent and rinsing by water jet.

In the present embodiment, an opening of the washed apparatus element is protected. The protection can be performed by blocking with a film or the like in order to prevent contamination by foreign matter from the outside. Examples of the film include, but are not particularly limited to, vinyl chloride films. Also, the protection may be performed by further covering the film with a bag. Alternatively, the protection may be performed by mounting a plywood to the film or the bag so as to protect them. In the present embodiment, the opening to be protected is preferably openings of all the apparatus elements constituting the polycarbonate manufacturing apparatus.

In the present embodiment, the apparatus element may be stored for a long period with its opening protected until connection mentioned later.

In the present embodiment, when the opening of the apparatus element is connected to the opening of another apparatus element, the connection is performed within a dust cover. Use of the dust cover can prevent contamination by foreign matter. The dust cover is not particularly limited as long as the duct cover has a size that allows the openings of the apparatus elements to be connected inside the dust cover. A known dust cover can be used. Examples of the material of the dust cover include, but are not particularly limited to, polyethylene.

Hereinafter, the polycarbonate manufacturing apparatus of the present embodiment will be described.

[Polycarbonate manufacturing apparatus]

In the polycarbonate manufacturing apparatus of the present embodiment, at least a portion of a metal surface

that comes into contact with an internal fluid has arithmetic average roughness Ra of 0.25 μm or less, preferably 0.23 μm or less, more preferably 0.2 μm or less.

The term "a portion" refers to 50% or more of the area of the whole metal surface that comes into contact with an internal fluid. The metal surface having Ra described above is preferably 90% or more, more preferably 95% or more, of the area of the whole metal surface that comes into contact with an internal fluid.

At least a portion of the metal surface has an arithmetic average roughness (Ra) of 0.25 μm or less, whereby polycarbonate manufactured by the polycarbonate manufacturing apparatus of the present embodiment can be prevented from forming minute foreign matter or a fisheye (gel) therein and furthermore, can also be prevented from being stained.

In this context, the arithmetic average roughness (Ra) is a parameter that is usually used to indicate the surface roughness of an industrial product, and is prescribed in JIS B 0031-2003 and JIS B 0601-2013. The Ra value can be measured using a stylus type surface roughness degree measuring instrument.

In the polycarbonate manufacturing apparatus of the present embodiment, examples of the method for adjusting the arithmetic average roughness (Ra) of the metal surface that comes into contact with an internal fluid to 0.25 μm or less include a polishing method prescribed in JIS H 0400-1998, and a method of performing chemical polishing or electrolytic polishing described in a 3010 buff polish method of pretreatment.

In the polycarbonate manufacturing apparatus of the present embodiment, after installation of the polycarbonate manufacturing apparatus in a factory, the inside of the polycarbonate manufacturing apparatus is washed with an aqueous solution of alkali metal hydroxide so that a total value of a sulfate ion ($SO_4^{2-}$) concentration and a fluoride ion ($F^-$) concentration in the aqueous solution removed from the inside of the polycarbonate manufacturing apparatus is preferably 150 ppb or less, more preferably 125 ppb or less, further preferably 100 ppb or less.

The total value of the concentrations is 150 ppb or less, whereby polymerization reaction for polycarbonate can progress at a practically sufficient rate.

Examples of the alkali metal hydroxide include potassium hydroxide. Its concentration in the aqueous solution is preferably from 0.5 ppm to 1.5 ppm.

A suitable method for adjusting the total value of the concentrations to 150 ppb or less involves, for example, filling the polycarbonate manufacturing apparatus with an aqueous solution of potassium hydroxide, and washing the inside by circulating the aqueous solution for approximately 5 hours with a pump or the like.

In the polycarbonate manufacturing apparatus of the present embodiment, when the inside of the apparatus is washed with an aqueous solution of potassium hydroxide as mentioned above and then washed with an aromatic monohydroxy compound, difference between "absorbance at 400 nm" and "absorbance at 700 nm" of the aromatic monohydroxy compound removed from the inside of the apparatus is preferably 0.002 or less, more preferably 0.0015 or less, further preferably 0.001 or less.

The difference in absorbance is 0.002 or less, whereby polycarbonate manufactured by the polycarbonate manufacturing apparatus of the present embodiment can be effectively prevented from being stained.

Examples of the aromatic monohydroxy compound include phenol.

The difference in absorbance can be controlled to 0.002 or less by adjusting the total value of a sulfate ion concentration and a fluoride ion concentration in the aqueous solution of alkali metal hydroxide mentioned above to 150 ppb or less in washing with the aqueous solution.

[Polycarbonate manufacturing apparatus]

A specific configuration of the polycarbonate manufacturing apparatus of the present embodiment will be described below with reference to the drawings.

Figure 5 shows a schematic configuration diagram of one example of the polycarbonate manufacturing apparatus of the present embodiment.

In the polycarbonate manufacturing apparatus, polymerization raw materials and a catalyst are added to mixing tank 31 and mixed, subsequently transferred to dissolved mixture reservoirs 33A and 33B through transfer pump 32, and further transferred therefrom through transfer pumps 34A and 34B to first polymerization vessel 35 where prepolymerization is performed.

The resultant is further transferred via gear pump 36 for discharge to second polymerization vessel 37 where prepolymerization is performed to obtain a polycarbonate prepolymer.

The polycarbonate prepolymer is transferred to first inert gas absorption apparatus 39 via supply pump 38, and after adjustment of the solubility of an inert gas by pressure regulating valve 41, further transferred to first guide-contact flow-down type polymerization apparatus 42 where the prepolymer is polymerized. Here, a low-molecular-weight component phenol which is a low-boiling substance is discharged from a vent.

Next, the resultant is transferred to second inert gas absorption apparatus 44 via supply pump 43 and further transferred therefrom using supply pumps 46A and 46B via three-way polymer valve 45. The solubility of an inert gas is adjusted by pressure regulating valves 47A and 47B, and the resultant is further transferred to second guide-contact

flow-down type polymerization apparatuses 48A and 48B connected thereto where the prepolymer is polymerized. Here, phenol is discharged from a vent.

The resultant is further transferred through supply pumps 49A and 49B, and an additive is added to post-stage devices 50A and 50B to obtain the polycarbonate of interest.

The pressure regulating valves 41, 47A, and 47B which adjust the solubility of an inert gas have a function of controlling a pressure by adjusting the apertures of the valves, and are not limited by their forms. The pressure regulating valves may be valves disposed in predetermined pipings or may be other devices capable of controlling a predetermined pressure.

A feature of the polycarbonate manufacturing apparatus of the present embodiment is to have a guide-contact flow-down type polymerization apparatus that allows a polycarbonate prepolymer to flow down along an external surface of a guide having no heating source in itself, while evaporating a low-boiling substance.

Figure 1 shows a schematic configuration diagram of the inert gas absorption apparatuses 39 and 44, and Figure 2 shows a schematic configuration diagram of the guide-contact flow-down type polymerization apparatuses 42, 48A, and 48B.

Each inert gas absorption apparatus and each guide-contact flow-down type apparatus differ in that their internal spaces have inert gas absorption zone 15 which performs the absorption of an inert gas and evaporation zone 5 which performs the evaporation of a low-boiling substance, respectively, though having a basic apparatus structure in common.

Figures 3 and 4 each shown a schematic diagram of upper parts of the inert gas absorption apparatus and the guide-contact type flow-down polymerization apparatus.

For the polycarbonate manufacturing apparatus of the present embodiment, it is preferred that the guide-contact flow-down type polymerization apparatus should satisfy the following <condition (1)> to <condition (9)>.

<Condition (1)>

Having liquid feed port 1, liquid supply zone 3 for supplying a liquid to guide 4 of evaporation zone 5 through porous plate 2, the evaporation zone 5 provided with a plurality of guides 4 extending downward from the porous plate 2 in a space surrounded by the porous plate 2, side casing 10, and bottom casing 11, vacuum vent 6 disposed in the evaporation zone 5, and liquid discharge port 7 disposed in a lowermost part of the bottom casing 11.

<Condition (2)>

Flow path control component 20 having a function by which a liquid to be supplied from the liquid feed port 1 to the porous plate 2 flows in a direction from a peripheral part of the porous plate 2 toward a central part in the liquid supply zone 3 is placed in the liquid supply zone 3.

<Condition (3)>

Internal cross-sectional area A ($m^2$) on a horizontal plane (in Figure 2, a plane taken along the a-a' line) of the side casing 10 of the evaporation zone 5 satisfies the following formula (I):

$$0.7 \leq A \leq 300 \quad \text{formula (I).}$$

<Condition (4)>

A ratio between the internal cross-sectional area A ($m^2$) and internal cross-sectional area B ($m^2$) on a horizontal plane (in Figure 2, a b-b' plane) of the liquid discharge port 7 satisfies the following formula (II) :

$$20 \leq A/B \leq 1000 \quad \text{formula (II).}$$

The formula (II) is satisfied, whereby a melted product of an evaporatively concentrated liquid or polymer or a manufactured polymer can be discharged with an elevated melt viscosity without reducing the quality of the liquid or the polymer.

<Condition (5)>

The bottom casing 11 constituting the bottom of the evaporation zone 5 is connected to the upper side casing

10 at an angle of C degrees with respect to the inside thereof, wherein the angle of C degrees (°) satisfies the following formula (III):

$$110 \leq C \leq 165 \quad \text{formula (III).}$$

For reducing the cost of equipment, C as close as possible to 90 degrees is preferred. Since a melted product of a concentrated liquid or polymer is efficiently moved with an elevated melt viscosity to the discharge port 7 without reducing the quality of the concentrated liquid or the polymer dropping from the lower end of the guide 4, it is preferred that C should satisfy the formula (III).

<Condition (6)>

Length h (cm) of the guide 4 satisfies the following formula (IV):

$$150 \leq h \leq 5000 \quad \text{formula (IV).}$$

The length h of the guide 4 is 150 cm or more, whereby concentration and polymerization can progress at a practically sufficient rate and quality. h is 5000 cm or less, whereby difference in liquid viscosity between an upper part and a lower part of the guide 4 is not too large, and variation in degree of concentration and variation in degree of polymerization can be prevented.

<Condition (7)>

Total external surface area S ($m^2$) of the plurality of guides 4 satisfies the following formula (V):

$$2 \leq S \leq 50000 \quad \text{formula (V).}$$

S ($m^2$) is 2 or more, whereby an amount of a liquid subjected to evaporation treatment and a yield of a manufactured polymer which are 1 or more ton per hour can be achieved.

S ($m^2$) is 50000 or less, whereby the cost of equipment is reduced while the yield can be achieved, and variation in physical properties can be suppressed.

<Condition (8)>

Average number N of pores per $m^2$ of the porous plate (number/$m^2$) satisfies the following formula (VI):

$$50 \leq N \leq 3000 \quad \text{formula (VI)}$$

The average number N of pores (number/$m^2$) of the porous plate is a numeric value obtained by dividing the total number of pores by area (including upper areas of the pores) T ($m^2$) of an upper face of the porous plate 2.

It is preferred that the pores of the porous plate 2 should be almost uniformly arranged in the porous plate 2. Distance K (cm) between a marginal part of the porous plate 2 and an internal wall face of the evaporation zone 5 is usually preferably longer than a distance between adjacent pores. Therefore, the number of pores per unit area at the marginal part is preferably smaller than the number of pores per unit area at the central part. In the present embodiment, average number N of pores is used in this context. The range of N is more preferably $70 \leq N \leq 2000$, further preferably $100 \leq N \leq 1000$.

<Condition (9)>

A ratio between upper area T ($m^2$) of the porous plate including upper areas of the pores of the porous plate and total effective cross-sectional area Q ($m^2$) of the pores satisfies the following formula (VII):

$$50 \leq T/Q \leq 3000 \quad \text{formula (VII).}$$

T/Q described above is more preferably from 100 to 2,500, further preferably from 250 to 1,500.

The "effective cross-sectional area" of a pore of the porous plate refers to the area of the narrowest part at the cross section of the pore through which a liquid passes. When the guide 4 penetrates this pore, the area is obtained by subtracting the cross-sectional area of the guide 4 from the cross-sectional area of the pore.

Q ($m^2$) represents the total effective cross-sectional area of the pores.

The formulas (VI) and (VII) are satisfied, whereby the evaporation treatment of a large amount of a liquid, particularly, a highly viscous liquid, can be performed continuously and stably for a long period.

The polycarbonate manufacturing apparatus of the present embodiment that satisfies the requirements of the condition (1) to the condition (9) mentioned above not only solves the problems of conventionally known evaporation apparatuses but can stably manufacture a high-quality and high-performance concentrated liquid or polymer with no stain in an amount of 1 or more ton per hour for a long period of several thousands of hours or longer, for example, 5,000 hours or longer.

The polycarbonate manufacturing apparatus of the present embodiment has the excellent effects mentioned above because effects exerted by the conditions (1) to (9) are combined, in addition to various reasons mentioned above.

For example, guides having a high surface area that satisfy the formulas (IV) and (V) are very effective for efficient internal stirring and surface renewal of a large amount of a liquid, a prepolymer, or a polymer supplied at a relatively low temperature, can efficiently perform the evaporation of a low-boiling substance, and are useful in obtaining an amount as large as 1 or more ton per hour of a high-quality concentrated liquid or polymer. Angle C (°) that satisfies the formula (III) can shorten a time required for a large amount of a high-quality concentrated liquid or polymer dropping from the guides 4 to be discharged from the liquid discharge port 7, and can reduce a heat history.

The performance of the guide-contact flow-down type polymerization apparatus at an industrial scale can be established for the first time by operation for a long time using large-scale manufacturing equipment. In this respect, the cost of manufacturing equipment is an important factor to be taken into consideration.

The guide-contact flow-down type polymerization apparatus constituting the polycarbonate manufacturing apparatus of the present embodiment can reduce the cost of equipment against performance as compared with conventional evaporation apparatuses or polymerization vessels.

Specific conditions or ranges required for a dimension, an angle, and the like in the guide-contact flow-down type polymerization apparatus of the present embodiment are as described above and are further preferably the following ranges.

The range of the internal cross-sectional area A ($m^2$) on a horizontal plane of the side casing 10 of the evaporation zone 5 shown in the formula (I) is more preferably $0.8 \leq A \leq 250$, further preferably $1 \leq A \leq 200$.

The range of the ratio between the internal cross-sectional area A ($m^2$) and the internal cross-sectional area B ($m^2$) on a horizontal plane of the liquid discharge port 7 shown in the formula (II) is more preferably $25 \leq A/B \leq 900$, further preferably $30 \leq A/B \leq 800$.

The range of the angle of C degrees (°) formed by the bottom casing 11 constituting the bottom of the evaporation zone 5 with respect to the inside of the upper side casing 10, shown in the formula (III) is more preferably $120 \leq C \leq 165$, further preferably $135 \leq C \leq 165$. In the case of sequentially elevating the degree of concentration or the degree of polymerization using a plurality of guides-contact flow-down type polymerization apparatuses, $C1 \leq C2 \leq C3 \leq ...$ is preferred when their corresponding angles are defined as C1, C2, C3, ...

Necessary length h (cm) of the guide 4 shown in the formula (IV) differs depending on difference in factors such as the amount, viscosity, and temperature of a liquid to be treated, the amount and boiling point of a low-boiling substance, the pressure and temperature of the evaporation zone, and a necessary degree of concentration or degree of polymerization, and the range thereof is more preferably $200 \leq h \leq 3000$, further preferably $400 < h \leq 2500$.

Necessary total external surface area S ($m^2$) of all the guides shown in the formula (V) also differs depending on difference in the same factors as above, and the range thereof is more preferably $10 \leq S \leq 40000$, further preferably $15 \leq S \leq 30000$.

In the present specification, the total external surface area of all the guides means the entire surface area of guides with which a liquid flows down in contact, and in the case of, for example, guides made of pipes, means external surface areas and excludes the surface areas of internal faces of the pipes where no liquid flows down.

As shown in Figures 1 to 3, the liquid feed port 1 is preferably disposed at an upper part of the liquid supply zone 3.

The liquid feed port 1 may be located at one site or a plurality of sites. It is preferred that the liquid feed port 1 should be arranged such that a liquid is supplied as uniformly as possible to the porous plate 2 in the liquid supply zone 3. In the case of one site, the liquid supply zone 3 is preferably disposed at an upper central part.

Flow path control component 20 having a function by which a liquid to be supplied from the liquid feed port 1 to the porous plate 2 flows mainly in a direction from a peripheral part of the porous plate 2 toward a central part in the liquid supply zone 3 is preferably placed in the liquid supply zone 3. The flow path control component 20 is effective for directing the flow of a liquid from the peripheral part of the porous plate 2 toward the central part and thereby preventing the liquid from residing for a long period in a space between a pore part (e.g., 21) of the porous plate 2 and internal

sidewall face 22 of the liquid supply zone. The liquid allowed to flow from the peripheral part of the porous plate 2 toward the central part is typically supplied from pores of the porous plate 2 present therebetween to the guides 4.

The flow path control component 20 may have any shape as long as the effects mentioned above can be exerted. The transverse-sectional outline thereof is preferably similar to the transverse-sectional outline of the porous plate 2. In this context, the transverse section of the flow path control component 20 refers to a location that exhibits the largest area when the flow path control component 20 is cut at its face in a lateral direction.

The interval between the flow path control component 20 and the internal sidewall face 22 of the liquid supply zone 3 differs in preferred range depending on the amount, viscosity, etc. of a liquid to be treated. When the viscosity of a liquid to be handled is relatively high in the guide-contact flow-down type polymerization apparatus or the inert gas absorption apparatus constituting the polycarbonate manufacturing apparatus of the present embodiment, the range is usually preferably from 1 cm to 50 cm, more preferably from 2 cm to 30 cm, further preferably from 3 cm to 20 cm.

As shown in Figures 3 and 4, there is a predetermined interval between upper internal wall face 23 of the liquid supply zone 3 and the flow path control component 20, and this interval can be appropriately selected and preferably minimizes a liquid residence time within the liquid supply zone 3. From such a viewpoint, the interval is preferably from 1 cm to 200 cm, more preferably from 2 cm to 170 cm, further preferably from 3 cm to 150 cm.

As for the interval between the upper internal wall face 23 of the liquid supply zone 3 and the flow path control component 20, the flow path control component 20 may attain almost the same interval from the liquid feed port 1 to the internal sidewall face 22 of the liquid supply zone 3, or the flow path control component 20 may attain the interval that is gradually narrowed or gradually widened.

The interval between the flow path control component 20 and the porous plate 2 is usually from 1 cm to 50 cm, preferably from 2 cm to 30 cm, more preferably from 3 cm to 20 cm.

The interval between the porous plate 2 and the flow path control component 20 may be almost the same interval from the internal sidewall face 22 of the liquid supply zone 3 to the central part of the porous plate, or the interval may be gradually narrowed or gradually widened. Flow path control component 20 that attains almost the same interval or the interval that is gradually narrowed is preferred.

The flow path control component 20 hinders the directing of a liquid supplied from the liquid feed port 1 directly to the pores of the porous plate 2 and therefore functions as a certain kind of baffle. When the porous plate 2 has a wide area, it is preferred that a portion of the supplied liquid should make a shortcut to near the central part of the porous plate 2 without passing through the peripheral part of the porous plate 2. For this reasons, in a preferred form, one or more pores are disposed near a central part of the flow path control component 20 or at other appropriate parts.

For creating no "dead space" in the liquid supply zone 3, it is further preferred that an angle formed by the internal sidewall face 22 of the liquid supply zone 3 and the porous plate 2, i.e., E degrees (°) in Figure 4, should satisfy the following formula (VIII):

$$100 \leq E < 180 \quad \text{formula (VIII).}$$

In this context, when the internal sidewall face 22 of the liquid supply zone 3 is planar, an angle formed by the internal sidewall face 22 and the porous plate 2 on a cut plane on a face that is perpendicular to the plane and perpendicular to an upper face of the porous plate 2 is defined as E.

When the internal sidewall face 22 is a concave curved face, an angle formed by a curve tangent and an upper face of the porous plate 2 at a point where a curve on a cut plane on a face that is perpendicular to the concave face and perpendicular to the upper face of the porous plate 2 starts to rise is defined as E.

The range of E is more preferably $120 \leq E \leq 180$, further preferably $145 \leq E < 180$.

It is also preferred to device a way to create no "dead space" near a junction between the upper internal wall face 23 and the internal sidewall face 22 of the liquid supply zone 3. When an angle formed by both the faces is larger than 90° or is 90° or close thereto, it is preferred to prepare a face near the junction into a concave face such that no liquid resides therein.

In the polycarbonate manufacturing apparatus of the present embodiment, it is preferred that distance K (cm) between the guide 4 closest to an internal wall face of the side casing 10 of the evaporation zone 5 and the internal wall face should satisfy the following formula (IX) :

$$5 \leq K \leq 50 \quad \text{formula (IX).}$$

When a liquid is attached to an internal wall face of the side casing 10 of the evaporation zone 5, evaporative concentration occurs on the internal wall face so that the concentrated liquid flows down on the internal wall face. However, in this internal wall, the liquid attached to the internal wall face is more highly concentrated than a liquid that

flows down on the guide 4 and usually has an elevated viscosity, because an external wall face is usually heated with a water vapor or a heat medium using a jacket or the like or heated with an electric heater or the like for the heat retention and/or heating of the evaporation zone 5. Such a liquid having an elevated viscosity flows down on a wall face for a longer time (residence time) and further has a higher viscosity.

In addition, heat denaturation also occurs easily due to constant heating from the external wall face. This tendency is very high, particularly, when a highly viscous liquid such as a prepolymer or a polymer is handled for use in a polymerization vessel or a polymer purification and/or recovery apparatus. In such a case, a polymer, etc. attached to the internal wall face of the evaporation zone 5 tends to be stained, increased in molecular weight, or gelled, and contamination by such a denatured product is not preferred for the polymer as a product. Thus, longer distance K (cm) between the guide 4 closest to the internal wall face and the internal wall face is more preferred. In the case of an industrial apparatus, shorter distance K is more preferred in consideration of manufacturing cost or for obtaining high evaporation power in an apparatus as small as possible.

A feature of the polycarbonate manufacturing apparatus of the present embodiment is the found range of K (cm) as short as possible (the formula (IX)) without adversely affecting a product.

The range of K (cm) is more preferably $10 \leq K \leq 40$, further preferably $12 \leq K \leq 30$.

In the polycarbonate manufacturing apparatus of the present embodiment, the internal cross-sectional shape on a horizontal plane of the side casing 10 of the evaporation zone 5 in the guide-contact flow-down type polymerization apparatus can be appropriately selected. Examples thereof include polygonal, oval, and round shapes.

The evaporation zone 5 is usually operated under reduced pressure and may therefore be any zone that resists such operation, and a round shape or a shape similar thereto is preferred. Thus, the side casing 10 of the evaporation zone 5 is preferably in a cylindrical shape. In this case, it is preferred that bottom casing 11 in a cone shape should be placed on an underpart of the side casing 10 in a cylindrical shape, and liquid discharge port 7 in a cylindrical shape should be disposed on a lowermost part of the bottom casing 11.

In the guide-contact flow-down type polymerization apparatus of the polycarbonate manufacturing apparatus of the present embodiment, the side casing 10 and the bottom casing 11 of the evaporation zone 5 may be in a cylindrical shape and in a cone shape, respectively, as described above, and the liquid discharge port 7 of a concentrated liquid or polymer may be in a cylindrical shape. In such a case, when an internal diameter of the cylindrical shape of the side casing 10 is defined as D (cm), the length thereof is defined as L (cm), and an internal diameter of the liquid discharge port 7 is defined as d (cm), it is preferred that D, L, and d should satisfy the following formulas (X), (XI), (XII), and (XIII):

$$100 \leq D \leq 1800 \quad \text{formula (X)}$$

$$5 \leq D/d \leq 50 \quad \text{formula (XI)}$$

$$0.5 \leq L/D \leq 30 \quad \text{formula (XII)}$$

$$h - 20 \leq L \leq h + 300 \quad \text{formula (XIII)}$$

wherein in the formula (XIII), h (cm) represents the length of the guide 4 shown in the <condition (6)>.

In the guide-contact flow-down type polymerization apparatus, the range of D (cm) is more preferably $150 \leq D \leq 1500$, further preferably $200 \leq D \leq 1200$.

The range of D/d is more preferably $6 \leq D/d \leq 45$, further preferably $7 \leq D/d \leq 40$.

The range of L/D is more preferably $0.6 \leq L/D \leq 25$, further preferably $0.7 \leq L/D \leq 20$.

The range of L (cm) is more preferably $h - 10 \leq L \leq h + 250$, further preferably, $h \leq L \leq h + 200$.

A prepolymer is attached to the guides 4 and drops by gravity. Accordingly, the predetermined numeric ranges are preferred from the viewpoint of balance between the amount of a prepolymer that can be attached to the guides 4 and the internal diameter D (cm) of the cylindrical shape of the side casing 10 and further, balance of the amplitude of the internal diameter d (cm) of the liquid discharge port 7. Specifically, the number of guides 4, i.e., the internal diameter D (cm) of the cylindrical shape of the side casing 10, depends on the amount of a prepolymer supplied. For extracting a polymer that has dropped (which has a higher viscosity than that of the supplied prepolymer because polymerization progresses), piping diameter d appropriate for the viscosity is necessary.

On the other hand, liquids or melted products are continuously supplied to the guides 4 from above. Therefore, the relationships of the formulas mentioned above are satisfied, whereby liquids having almost the same viscosity or melted products with a higher degree of polymerization having almost the same melt viscosity continuously drop to the

bottom casing 10 from the lower ends of the guides 4. Specifically, liquids having almost the same viscosity or polymers having almost the same degree of polymerization which have been formed while flowing down on the guides 4 accumulate in a lower part of the bottom casing 10 so that concentrated liquids having no variation in degree of evaporation or polymers having no variation in molecular weight are continuously manufactured. This is one of the excellent features of the guide-contact flow-down type polymerization apparatus constituting the polycarbonate manufacturing apparatus of the present embodiment.

The concentrated liquids or the polymers accumulating in the lower part of the bottom casing 11 are continuously extracted by discharge pump 8 through the liquid discharge port 7, and the polymers are usually continuously pelletized through an extruder or the like. In this case, an additive or the like may be added to the extruder.

In the polycarbonate manufacturing apparatus of the present embodiment, it is preferred that space volume V ($m^3$) where a liquid can exist in the liquid supply zone 3 from the liquid feed port 1 (junction between the liquid feed port 1 and an upper internal wall of the liquid supply zone 3) to an upper face of the porous plate 2, and upper area T ($m^2$) of the porous plate 2 including upper areas of the pores should satisfy the following formula (XIV):

$$0.02\ (m) \leq V/T \leq 0.5\ (m) \quad \text{formula (XIV)}.$$

The space volume V ($m^3$) is a substantial liquid volume in the liquid supply zone 3 during continuous operation of the guide-contact flow-down type polymerization apparatus and excludes the volume of the flow path control component 20.

The amount of a liquid retained in the liquid supply zone 3 is V ($m^3$). A smaller amount of this V reduces a residence time in the liquid supply zone 3 and is free from an adverse effect ascribable to heat denaturation. When the amount of a liquid subjected to evaporation treatment is 1 ton/hr or more and for stably obtaining a concentrated liquid and/or polymer having a predetermined degree of concentration or degree of polymerization for a long period, it is preferred to supply a liquid as evenly as possible to the pores of the porous plate 2. For this reason, the value of V/T is preferably in the range of the formula (XIV). The range of the value of V/T is more preferably $0.05\ (m) \leq V/T \leq 0.4\ (m)$, further preferably $0.1\ (m) \leq V/T \leq 0.3\ (m)$.

In the guide-contact flow-down type polymerization apparatus of the polycarbonate manufacturing apparatus of the present embodiment, it is preferred that the space volume V ($m^3$) where a liquid can exist in the liquid supply zone 3, and space volume Y ($m^3$) of the evaporation zone 5 should satisfy the following formula:

$$10 \leq Y/V \leq 500.$$

For stably and efficiently performing the evaporation treatment of a large amount of a liquid per unit time for a long time without causing reduction in physical properties by heat denaturation, the value of Y/V is preferably in this range. The range of the value of Y/V is more preferably $15 \leq Y/V \leq 400$, further preferably $20 \leq Y/V \leq 300$.

The space volume Y ($m^3$) of the evaporation zone 5 is a space volume from a lower face of the porous plate 2 to the liquid discharge port 7 and includes volumes occupied by the guides.

In the guide-contact flow-down type polymerization apparatus constituting the polycarbonate manufacturing apparatus of the present embodiment, when one guide 4 is in a columnar form with external diameter r (cm), or in a pipe form that inhibits a liquid, a gaseous substance, or a melted prepolymer from entering the inside, it is preferred that the external diameter r (cm) should satisfy the following formula (XV):

$$0.1 \leq r \leq 1 \quad \text{formula (XV)}.$$

The guides 4 allow evaporative concentration or polymerization reaction to progress while a liquid or a melted prepolymer flows down thereon. The guides 4 also have a function of retaining the liquid or the melted prepolymer for a certain time. This retention time is related to an evaporation time or a polymerization reaction time. The liquid viscosity or the melt viscosity thereof is elevated with the progression of evaporation or polymerization. Therefore, the retention time and the amount of the liquid or the melted prepolymer retained are increased. The amount of the liquid or the melted prepolymer retained by each guide 4 differs depending on the external surface area of the guide 4, i.e., the external diameter thereof in the case of a columnar form or a pipe form, even if the melt viscosity is the same.

The guides 4 placed in the guide-contact flow-down type polymerization apparatus need to be strong enough to support the masses of the guides 4 themselves as well as the mass of the retained liquid, melted prepolymer, or polymer. In this context, the thicknesses of the guides 4 are important. In the case of a columnar form or a pipe form, it is preferred to satisfy the formula (XV).

When the external diameter r (cm) of the guide 4 is 0.1 or more, stable operation for a long time is possible in terms of strength. r (cm) is 1 or less, whereby the guides themselves can be prevented from becoming very heavy, and inconvenience such as the thickness of the porous plate 2 that must be very large for retaining the guides in the guide-contact flow-down type polymerization apparatus, for example, can be circumvented. Besides, the number of parts having too large an amount of a liquid, a melted prepolymer, or a polymer retained can be prevented from being increased, and inconvenience such as large variation in degree of concentration or in molecular weight can be circumvented.

In this context, the range of the external diameter r (cm) of the guide 4 is more preferably $0.15 \leq r \leq 0.8$, further preferably $0.2 \leq r \leq 0.6$.

The positional relationship between the guides 4 and the porous plate 2 and the positional relationship between the guides 4 and the pores of the porous plate 2 are not particularly limited as long as a liquid, a raw material-melted prepolymer, or a polymer flows down in contact with the guides.

The guides 4 and the porous plate 2 may be in contact with each other or may be in no contact with each other.

It is preferred that the guides 4 should be placed so as to correspond to the pores of the porous plate 2, though the positional relationship is not limited thereto. This is because design can be made such that a liquid, a raw material-melted prepolymer, or a polymer dropping from the porous plate 2 comes into contact with the guides 4 at appropriate positions.

Preferred examples of the form in which the guides 4 are placed so as to correspond to the pores of the porous plate 2 include (1) a way in which the upper ends of the guides 4 are fixed to an underpart or the like of the flow path control component 20 so that the guides 4 are disposed in a state where the guides 4 penetrate central parts or their neighborhoods of the pores of the porous plate 2, (2) a way in which the upper ends of the guides 4 are fixed to marginal parts at upper ends of the pores of the porous plate 2 so that the guides 4 are disposed in a state where the guides 4 penetrate the pores of the porous plate 2, and (3) a way in which upper ends of the guides 4 are fixed to a lower face of the porous plate 2.

Example of the method for allowing a liquid, a raw material-melted prepolymer, or a polymer to flow down along the guides 4 through the porous plate 2 include a method of allowing the liquid, the raw material-melted prepolymer, or the polymer to flow down by a liquid head or a self-weight, and a method of extruding the liquid, the raw material-melted prepolymer, or the polymer from the porous plate 2 by pressurization using a pump or the like. The method is preferably a method of supplying a predetermined amount of the liquid, the raw material-melted prepolymer, or the polymer to the liquid supply zone 3 of the guide-contact flow-down type polymerization apparatus under pressurization using a supply pump so that the liquid, the raw material-melted prepolymer, or the polymer directed to the guides 4 through the porous plate 2 flow down along the guides by a self-weight.

In the polycarbonate manufacturing apparatus of the present embodiment, preferred materials of such guides 4 and other apparatus elements are selected from among stainless steel, carbon steel, metals such as Hastelloy, nickel, titanium, chromium, aluminum, and other alloys, a highly heat-resistant polymer material, and the like. Stainless steel is particularly preferred.

When the polycarbonate manufacturing apparatus of the present embodiment stably manufactures a high-quality and high-performance concentrated liquid or polymer, particularly, a polymer, excellent in mechanical physical properties with no stain for a long period at an industrial scale at a fast evaporation rate or a fast polymerization rate, the manufacturing can be achieved without variation in molecular weight of the polymer, for example, for the following reasons.

Specifically, in the guide-contact flow-down type polymerization apparatus constituting the polycarbonate manufacturing apparatus of the present embodiment, a raw material liquid is directed from the liquid feed port 1 via the liquid supply zone 3 and the porous plate 2 to the guides 4 and concentrated while flowing down along the guides 4, or the degree of polymerization is elevated during this flow-down. In this case, a liquid or a melted prepolymer is subjected to effective internal stirring and surface renewal while flowing down along the guides 4, and a low-boiling substance is effectively extracted. Therefore, concentration or polymerization progresses at a fast rate. Since the viscosity thereof is elevated with the progression of concentration or polymerization, tack strength to the guides 4 is increased, and the amount of a liquid or a melted product adhering to the guides 4 is increased downhill along the guides 4. This means that the residence time on the guides 4, i.e., the evaporation time or the polymerization reaction time, of the liquid or the melted prepolymer is increased. Furthermore, the liquid or the melted prepolymer flowing down by a self-weight while supported by the guides 4 has a very wide surface area per weight, and its surface renewal is efficiently performed. This can readily achieve increase in molecular weight in the latter half of evaporative concentration or polymerization in a highly viscous region, which is absolutely impossible for conventionally known evaporation apparatuses or mechanical stirring type polymerization vessels. This is one of the excellent features of the polycarbonate manufacturing apparatus of the present embodiment.

In the guide-contact flow-down type polymerization apparatus constituting the polycarbonate manufacturing apparatus of the present embodiment, the amounts of liquids or melted products adhering to the guides 4 are increased in the latter half of evaporation or polymerization. Because of a mere tack retaining power appropriate for the viscosity

thereof, almost the same amount of liquids or melted products having almost the same viscosity are supported by the respective guides 4 at the same height of the plurality of guides 4. On the other hand, since liquids or melted products are continuously supplied to the guides 4 from above, liquids having almost the same viscosity or melted products with a higher degree of polymerization having almost the same melt viscosity continuously drop to the bottom casing 11 from the lower ends of the guides 4. Specifically, liquids having almost the same viscosity or polymers having almost the same degree of polymerization which have been formed while flowing down on the guides 4 accumulate in a lower part of the bottom casing 11 so that concentrated liquids having no variation in degree of evaporation or polymers having no variation in molecular weight are continuously manufactured. This is one of the excellent features of the guide-contact flow-down type polymerization apparatus constituting the polycarbonate manufacturing apparatus of the present invention. The concentrated liquids or the polymers accumulating in the lower part of the bottom casing 11 are continuously extracted by discharge pump 8 through the liquid discharge port 7, and the polymers are usually continuously pelletized through an extruder or the like. In this case, an additive or the like may be added to the extruder.

The porous plate 2 constituting the guide-contact flow-down type polymerization apparatus is usually selected from a flat plate, a corrugated plate, a plate having a thick central part, and the like. The transverse-sectional shape of the porous plate 2 is usually selected from shapes such as round, elongated, triangular, and polygonal shapes.

The transverse sections of the pores of the porous plate 2 are usually selected from shapes such as round, elongated, triangular, slit, polygonal, and star shapes.

The cross-sectional area of each pore of the porous plate is in the range of usually 0.01 to 100 $cm^2$, preferably 0.05 to 10 $cm^2$, more preferably 0.1 to 5 $cm^2$. The interval between the pores is usually from 1 to 500 mm, preferably from 10 to 100 mm, in terms of the distance between the centers of the pores. The pores of the porous plate 2 may be through-holes of the porous plate 2 or may be non-penetrating pores of the porous plate 2, and may be configured such that predetermined tubes are mounted to the porous plate 2. The pores of the porous plate may be in a tapered shape at a cross section in the depth direction.

In the guide-contact flow-down type polymerization apparatus, it is preferred for the porous plate 2 and its pores that the formula (VI) and the formula (VII) should be satisfied, as mentioned above.

The guides 4 constituting the guide-contact flow-down type polymerization apparatus have no heating source (e.g., heat medium or electric heater) inside the guides themselves and are preferably constituted by a material having a very large ratio of a cross-sectional length in the perpendicular direction to an average cross-sectional outer perimeter in the horizontal direction. The ratio of (cross-sectional length in the perpendicular direction / average cross-sectional outer perimeter in the horizontal direction) is usually in the range of 10 to 1,000,000, preferably in the range of 50 to 100,000.

The cross-sectional shapes in the horizontal direction of the guides 4 are usually selected from shapes such as round, elongated, triangular, rectangular, polygonal, and star shapes. The cross-sectional shapes of the guides 4 may be the same or different in the length direction. The guides 4 may be in a hollow shape. Since the guides 4 constituting the polycarbonate manufacturing apparatus of the present embodiment have no heating source in themselves, a large feature thereof is no fear of heat denaturation of a liquid on the surfaces of the guides 4.

The guides 4 may each be made of a single substance such as wire, a thin rod, or a thin pipe that inhibits a liquid or a melted prepolymer from entering the inside, or may be made of a combination of a plurality of substances by a method such as intertwining. Alternatively, net-like guides or punching plate-like guides may be used.

The guides 4 may have a smooth surface or surface asperities, or their surfaces may partially have a protrusion or the like. The guides 4 are preferably in a columnar form such as wire or thin rod form, in the thin pipe form described above, net-like guides, or punching plate-like guides.

In the guide-contact flow-down type polymerization apparatus constituting the polycarbonate manufacturing apparatus of the present embodiment capable of manufacturing a high-quality concentrated liquid or polymer at an industrial scale (yield, long-term stable manufacturing, etc.), a configuration is particularly preferred in which a plurality of guides are joined through a supporting material. Specifically, such guides are of type in which respective guides 4 in a wire or thin rod form or in the thin pipe form are joined at appropriate vertical intervals using a transverse supporting material from upper to lower parts of the guides 4.

Examples thereof include: grid-like or net-like guides in which a plurality of guides 4 in a wire or thin rod form or in the thin pipe form are fixed at appropriate vertical intervals, for example, 1-cm to 200-cm intervals, using a transverse supporting material from upper to lower parts of the guides 4; steric guides in which a plurality of grid-like or net-like guides are anteroposteriorly arranged and joined at appropriate vertical intervals, for example, 1-cm to 200-cm intervals, using a transverse supporting material; and jungle gym-like steric guides in which a plurality of guides 4 in a wire or thin rod form or in the thin pipe form are anteroposteriorly and laterally fixed at appropriate vertical intervals, for example, 1-cm to 200-cm intervals, using a transverse supporting material.

The transverse supporting material is not only useful for keeping the intervals between the guides almost the same, but useful in enhancing the strength of guides that are in a planar or curved shape as a whole or guides that are steric as a whole. Such a supporting material may be made of the same material or a different material as or from that

of the guides.

The guide-contact flow-down type polymerization apparatus constituting the polycarbonate manufacturing apparatus of the present embodiment has a function of evaporating a low-boiling substance from a liquid containing the low-boiling substance which has a lower boiling point than that of the liquid.

This liquid may have ordinary temperature and is usually supplied in a heated state from the liquid feed port 1 to the guide-contact flow-down type polymerization apparatus. A jacket or the like is usually preferably placed on an external wall face of this guide-contact flow-down type polymerization apparatus. It is preferred to perform, for example, the heating and/or heat retention of the liquid supply zone 3, the flow path control component 20, or the porous plate 2 or the heat retention of the evaporation zone 5 by heating with a water vapor, a heat medium, or the like through this jacket, if necessary.

The guide-contact flow-down type polymerization apparatus constituting the polycarbonate manufacturing apparatus of the present embodiment is not only used as an apparatus for mere concentration of liquids, but can be used as an evaporation apparatus targeting relatively highly viscous liquids, such as a polymerization apparatus for a condensation polymer, a purification apparatus for thermoplastic polymers containing low-boiling substances such as monomers, oligomers, or byproducts, or a separation and recovery apparatus of thermoplastic polymers from their solutions.

Thus, when the liquid to be supplied from the liquid supply zone 3 is a monomer for manufacturing a condensation polymer, a mixture of two or more monomers, a prepolymer of a condensation polymer, or a melted liquid of a condensation polymer, and the low-boiling substance is a by-product and/or an oligomer formed through polycondensation reaction, the guide-contact flow-down type polymerization apparatus can be used as a polymerization apparatus for a condensation polymer in order to improve the degree of polymerization of the prepolymer of a condensation polymer and/or the polymer by evaporatively removing the low-boiling substance from the melted liquid.

Preferred examples of the condensation polymer include: polycarbonates such as aliphatic polycarbonate, aromatic polycarbonate, and various co-polycarbonates; and polyester polycarbonates.

Use of the polycarbonate manufacturing apparatus of the present embodiment having the guide-contact flow-down type polymerization apparatus mentioned above can stably manufacture a high-purity and high-performance condensation polymer with no stain, gelled substance, or solid foreign matter and without variation in molecular weight for a long time.

The guide-contact flow-down type polymerization apparatus constituting the polycarbonate manufacturing apparatus of the present embodiment is suitable for evaporatively removing a low-boiling substance from a relatively highly viscous liquid.

For example, in the case of using the guide-contact flow-down type polymerization apparatus as a polymerization vessel for condensation polymers, this polymerization vessel is free from the inevitable disadvantage of conventionally known polymerization vessels that a portion of a liquid resides while heated for a long time at some location, whereby the residing liquid causes denaturation such as staining, gelling, cross-linking, excessive increase in molecular weight, solidification, burning, or carbonization, and such a denatured product gradually or intensively contaminates a polymer. The polymerization vessel has non-conventional excellent effects, in addition to the absence of such a disadvantage.

Specifically, the temperature of reaction in manufacturing polycarbonate by polymerizing a melted prepolymer obtained from, for example, a dihydroxy compound and diaryl carbonate, usually needs to be in the range of 200 to 350°C. Particularly, in the latter half of polymerization, the viscosity thereof is quickly elevated, and an aromatic monohydroxy compound formed through equilibrium reaction from the resulting ultrahigh-viscosity substance must be extracted. Therefore, even if a conventional polymerization vessel, for example, a horizontal biaxial stirring type reactor for an ultrahigh-viscosity polymer, is used, the reaction must be performed at a high temperature of 300°C or higher and further under high vacuum of 133 Pa or less for a long time. In addition, a high-molecular-weight form for a sheet, etc. is difficult to manufacture.

However, in the guide-contact flow-down type polymerization apparatus constituting the polycarbonate manufacturing apparatus of the present embodiment, efficient surface renewal with internal stirring is performed. Therefore, the polymerization reaction can progress at a relatively low temperature. Thus, the reaction temperature is preferably from 100 to 290°C, more preferably from 150 to 270°C. A feature of the polycarbonate manufacturing apparatus of the present embodiment is that polymerization can sufficiently progress at a lower temperature than that of conventional mechanical stirring type polymerization vessels. This constitutes one of the reasons why high-quality polycarbonate with no stain and no reduction in physical properties can be manufactured.

Furthermore, conventionally known polymerization vessels have the disadvantage that air or the like leaks into a seal part of a stirrer under high vacuum, causing contamination by foreign matter, for example. By contrast, in the guide-contact flow-down type polymerization apparatus constituting the polycarbonate manufacturing apparatus of the present embodiment, the chance of leak of air or the like thereinto or contamination by foreign matter is very small because of the absence of mechanical stirring and the absence of a seal part of a stirrer. Thus, high-purity and high-performance polycarbonate can be manufactured.

In the case of manufacturing a condensation polymer using the polycarbonate manufacturing apparatus of the

present embodiment, a reaction rate can be enhanced by removing a low-boiling substance formed as a by-product through equilibrium reaction with the progression of polymerization reaction to the outside of the reaction system. Thus, for example, a method of introducing an inert gas that does not adversely affect the reaction, such as a nitrogen, argon, helium, carbon dioxide, or lower hydrocarbon gas, to the guide-contact flow-down type polymerization apparatus, and removing the low-boiling substance by entrainment into such a gas, or a method of performing the reaction under reduced pressure is preferably used. Alternatively, a combined method of these methods is also preferably used. In these cases as well, an inert gas does not have to be introduced in a large amount to the guide-contact flow-down type polymerization apparatus, and can be introduced to the extent that the inside is retained in an inert gas atmosphere.

In the case of manufacturing a condensation polymer using the polycarbonate manufacturing apparatus of the present embodiment, the reaction pressure of the guide-contact flow-down type polymerization apparatus differs depending on the type of a by-product low-boiling substance, the type and molecular weight of a polymer to be manufactured, a polymerization temperature, etc. In the case of manufacturing polycarbonate from a melted prepolymer obtained from, for example, bisphenol A and diphenyl carbonate, the reaction pressure is preferably in the range of 400 to 3,000 PaA when the number-average molecular weight of the polycarbonate to be manufactured is in the range of 5,000 or smaller, and is preferably in the range of 50 to 500 PaA when the number-average molecular weight is from 5,000 to 10,000. The reaction pressure is preferably 300 PaA or lower, particularly preferably in the range of 20 to 250 PaA when the number-average molecular weight is 10,000 or larger.

In the case of manufacturing a condensation polymer using the guide-contact flow-down type polymerization apparatus of the present embodiment as a polymerization vessel, the polymer having the degree of polymerization of interest may be manufactured using only one guide-contact flow-down type polymerization apparatus, or a scheme in which two or more guide-contact flow-down type polymerization apparatuses are connected so as to sequentially elevate the degree of polymerization may be adopted according to the degree of polymerization of a melted monomer serving as a raw material or a melted prepolymer, the yield of the polymer, etc.

In such a case, it is preferred that the second or more guide-contact flow-down type polymerization apparatuses should also satisfy <condition (1)> to <condition (9)> mentioned above, and the two or more guide-contact flow-down type polymerization apparatuses should be connected in series, in parallel, or both in series and in parallel.

In this case, the respective guide-contact flow-down type polymerization apparatuses can each independently adopt guides and reaction conditions suitable for the degree of polymerization of a prepolymer or a polymer to be manufactured.

For example, in a scheme in which a first guide-contact flow-down type polymerization apparatus, a second guide-contact flow-down type polymerization apparatus, a third guide-contact flow-down type polymerization apparatus, a fourth guide-contact flow-down type polymerization apparatus ... are used, and the degree of polymerization is elevated in this order, $S1 \geq S2 \geq S3 \geq S4 \geq ...$ can be established when the total external surface area of all the guides in each polymerization apparatus is defined as S1, S2, S3, S4 ...

The polymerization temperature may be the same temperature among the respective polymerization apparatuses or may be sequentially elevated.

The polymerization pressure may be sequentially lowered in the respective polymerization apparatuses.

In this context, for example, in the case of using two polymerization apparatuses, a first guide-contact flow-down type polymerization apparatus and a second guide-contact flow-down type polymerization apparatus, and elevating the degree of polymerization in this order, it is preferred that total external surface area S1 ($m^2$) of all the guides of the first guide-contact flow-down type polymerization apparatus, and total external surface area S2 ($m^2$) of all the guides of the second guide-contact flow-down type polymerization apparatus should satisfy the following formula (XVI):

$$1 \leq S1/S2 \leq 20 \quad \text{formula (XVI).}$$

The value of S1/S2 is 1 or more, whereby variation in molecular weight can be suppressed, and stable manufacturing is possible for a long period. Thus, the desired yield can be obtained.

S1/S2 is 20 or less, whereby the flow rate of a melted prepolymer flowing down on the guides in the second guide-contact flow-down type polymerization apparatus can be controlled. As a result, the residence time of the melted prepolymer can be sufficiently secured, and a polymer having a necessary molecular weight can be obtained. The range is more preferably $1.5 \leq S1/S2 \leq 15$.

In the polycarbonate manufacturing apparatus of the present embodiment, an inert gas absorption apparatus for allowing an inert gas to be absorbed to a melted prepolymer of a condensation polymer before supply to the guide-contact flow-down type polymerization apparatus is preferably further placed.

In the case of using a plurality of guide-contact flow-down type polymerization apparatuses connected, an inert gas absorption apparatus for allowing an inert gas to be absorbed to a melted prepolymer of a condensation polymer before supply to each of the guide-contact flow-down type polymerization apparatuses is preferably placed in each of

the polymerization apparatuses. The inert gas absorption apparatus thus placed can further enhance the advantageous effects of the present invention.

Hereinafter, the case of using a pair of one guide-contact flow-down type polymerization apparatus and one inert gas absorption apparatus will be described.

A melted prepolymer is introduced to the inert gas absorption apparatus before being supplied to the guide-contact flow-down type polymerization apparatus. In the inert gas absorption apparatus, the melted prepolymer is treated with an inert gas so that the inert gas is absorbed to the melted prepolymer and thereby absorbed in a specific amount of 0.0001 to 1 NL (wherein NL (normal litter) represents a volume measured under conditions of standard temperature and pressure) per kg of the melted prepolymer to the melted prepolymer. Subsequently, the melted prepolymer with this specific amount of the inert gas absorbed is supplied to the guide-contact flow-down type polymerization apparatus and polymerized.

The phrase "melted prepolymer is treated with an inert gas" means that the inert gas is absorbed to the melted prepolymer under conditions where the melted prepolymer is difficult to polymerize.

The amount of the inert gas absorbed to the melted prepolymer is in the range of preferably 0.0001 to 1 NL, more preferably 0.001 to 0.8 NL, further preferably 0.005 to 0.6 NL, per kg of the melted prepolymer.

If the amount of the inert gas absorbed is smaller than 0.0001 NL per kg of the melted prepolymer, a polymerization rate-elevating effect achieved by using the inert gas-absorbed prepolymer and a stable polycarbonate manufacturing effect achieved by using the inert gas-absorbed prepolymer are small. The amount of the inert gas absorbed does not have to be larger than 1 NL per kg of the melted prepolymer.

The advantageous effects of the present invention can be further enhanced by polymerizing the aforementioned melted prepolymer with the specific amount of the inert gas absorbed in the guide-contact flow-down type polymerization apparatus mentioned above.

The amount of the inert gas absorbed to the melted polymer can be easily measured, usually, by directly measuring the amount of the inert gas supplied. When the inert gas is absorbed to the melted prepolymer while circulated in the inert gas absorption apparatus, the amount of the inert gas absorbed can be determined from difference between the amount of the inert gas supplied and the amount of the inert gas discharged. This amount can also be measured from the amount of a pressure decreased in the inert gas absorption apparatus resulting from the supply of the melted prepolymer in a predetermined amount to the inert gas absorption apparatus charged with the inert gas having a predetermined pressure, and the absorption of the inert gas to the melted prepolymer. Alternatively, the amount of the inert gas absorbed may be measured by batch measurement which involves supplying a predetermined amount of the melted prepolymer in a batch manner to the inert gas absorption apparatus, and then measuring the amount of the inert gas absorbed, or continuous measurement which involves continuously supplying the melted prepolymer to the absorption apparatus, and measuring the amount of the inert gas absorbed while continuously extracting the melted prepolymer.

In the present embodiment, the inert gas absorption apparatus is preferably used for allowing an inert gas to be absorbed by treating a melted prepolymer with the inert gas at a predetermined pressure under conditions where the melted prepolymer is difficult to polymerize.

The phrase "allowing an inert gas to be absorbed to a melted prepolymer" or "inert gas is absorbed to a melted prepolymer" means that the inert gas is dispersed and/or dissolved in the melted prepolymer.

The dispersion means a state where the inert gas is mixed as air bubbles into the melted prepolymer to form a gas-liquid mixed phase. The dissolution means a state where the inert gas blends in the melted prepolymer to form a homogeneous liquid phase.

The inert gas is particularly preferably dissolved in the melted prepolymer, not merely dispersed therein.

For efficiently dissolving the inert gas in the melted prepolymer, it is preferred to enhance contact efficiency by increasing a gas-liquid interface area or to carry out the dissolution under pressurization of the inert gas.

The inert gas absorption apparatus is not particularly limited by its model as long as the apparatus can allow an inert gas to be absorbed to a melted prepolymer. Examples thereof include known apparatuses such as packed tower type absorption apparatuses, plate tower type absorption apparatuses, spray tower type absorption apparatuses, fluidized packed tower type absorption apparatuses, liquid film cross-flow absorption type absorption apparatuses, high-speed spiral-flow absorption apparatuses, and absorption apparatuses using mechanical power, described in Kagaku Souchi Sekkei (Chemical Apparatus Design in English) - operation series No. 2, revised, gas absorption, p. 49-54 (March 15, 1981, issued by Kagaku Kogyo Co., Ltd.), and absorption apparatuses configured to allow the melted prepolymer to drop along the guides in an inert gas atmosphere. Alternatively, the absorption apparatus may be configured to directly supply the inert gas into a piping through which the melted prepolymer is supplied to the guide-contact flow-down type polymerization apparatus. Use of a spray tower type absorption apparatus or an absorption apparatus configured to allow the melted prepolymer to drop along the guides in an inert gas atmosphere is a particularly preferred method.

An apparatus in the same form as that of the guide-contact flow-down type polymerization apparatus is particularly preferably used as the inert gas absorption apparatus.

Since the inert gas absorption apparatus is operated under conditions that allow polymerization to rarely

progress, an excellent feature of the apparatus in this form, albeit totally functionally different from the guide-contact flow-down type polymerization apparatus, is that very efficient inert gas absorption in a short time is possible owing to a very large surface area per mass of the melted prepolymer during flow-down on the guides, and very favorable surface renewal and internal stirring of the melted prepolymer in corporation.

Unlike the guide-contact flow-down type polymerization apparatus, the inert gas absorption apparatus is substantially free from change in viscosity of the melted prepolymer between upper and lower parts of the guides and therefore has the ability to highly treat the melted prepolymer per unit time. Thus, the inert gas absorption apparatus is generally smaller than the guide-contact flow-down type polymerization apparatus even if these apparatuses are in the same form.

A preferred method for manufacturing polycarbonate using the polycarbonate manufacturing apparatus of the present embodiment will be described.

When the number-average molecular weight of the melted prepolymer before and after inert gas absorption is defined as $M_1$ and $M_2$, respectively, change in molecular weight between before and after inert gas absorption ($M_2$ - $M_2$) is substantially preferably 2,000 or less, more preferably 1,000 or less, still more preferably 500 or less.

The temperature at which the inert gas is absorbed to the melted prepolymer is not particularly limited as long as the prepolymer is in a melted state. The temperature is in the range of usually 150 to 350°C, preferably 180 to 300°C, more preferably 230 to 270°C.

Pressure Pg (PaA) at which the inert gas is absorbed to the melted prepolymer is preferably equal to or higher than the pressure used for manufacturing the melted prepolymer.

Specifically, the inert gas is preferably absorbed under a pressure condition equal to or higher than the reaction pressure used in manufacturing the melted polycarbonate prepolymer by reacting a dihydroxy compound with diaryl carbonate.

The pressure Pg (PaA) is higher than pressure Pp (PaA) of the subsequent polymerization reaction in the guide-contact flow-down type polymerization apparatus and preferably satisfies a relationship of the following formula with $M_1$ (number-average molecular weight of the melted prepolymer before inert gas absorption):

$$Pg > 4 \times 10^{12} \times M_1^{-2.6871}$$

If Pg (PaA) does not satisfy the relationship of the formula, a polymerization rate-elevating effect achieved by using the inert gas-absorbed prepolymer and a stable polycarbonate manufacturing effect achieved by using the inert gas-absorbed prepolymer are small.

The pressure for inert gas absorption is particularly preferably ordinary pressure or pressurization because the absorption rate of the inert gas to the melted prepolymer is enhanced, and consequently, the absorption apparatus can be small. The upper limit of the pressure for inert gas absorption is not particularly limited, and the inert gas absorption is performed at a pressure of usually $2 \times 10^7$ PaA or lower, preferably $1 \times 10^7$ PaA or lower, more preferably $5 \times 10^6$ PaA or lower.

The method for allowing an inert gas to be absorbed to a melted prepolymer in the inert gas absorption apparatus may be a method of allowing a large portion of the inert gas supplied to the inert gas absorption apparatus to absorbed into the melted prepolymer, or may be a method of allowing a portion of the supplied inert gas to be absorbed into the melted prepolymer.

Examples of the former method include a method of using a spray tower type absorption apparatus or an apparatus that allows the inert gas to be absorbed while allowing the melted prepolymer to drop along the guides, supplying the inert gas in an amount almost equal to that of the inert gas absorbed into the melted prepolymer, and performing absorption while keeping the pressure of the absorption apparatus almost constant, and a method using an absorption apparatus that directly supplies the inert gas into a piping through which the melted prepolymer is supplied to the guide-contact flow-down type polymerization apparatus.

Examples of the latter method include a method of using, as the inert gas absorption apparatus, a spray tower type absorption apparatus or an apparatus that allows the inert gas to be absorbed while allowing the melted prepolymer to drop along the guides, circulating the inert gas in more than the amount of the inert gas absorbed into the melted prepolymer in the inert gas absorption apparatus, and discharging an excess of the inert gas from the inert gas absorption apparatus.

The former method is particularly preferred from the viewpoint of a smaller amount of the inert gas used.

The inert gas absorption can be performed by any of a continuous method of continuously supplying the melted prepolymer to the inert gas absorption apparatus so that the inert gas is absorbed thereto, and continuously extracting the inert gas-absorbed melted prepolymer, and a batch method of charging the absorption apparatus with the melted prepolymer in a batch manner so that the inert gas is absorbed thereto.

The inert gas is a generic name for gases that do not cause chemical reaction with the melted prepolymer and

are stable under polymerization conditions. Examples of the inert gas include nitrogen, argon, helium, carbon dioxide, organic compounds that are in a gas form at a temperature at which the prepolymer keeps its melted state, and lower hydrocarbon gases having 1 to 8 carbon atoms. Nitrogen is particularly preferred.

In an industrial continuous evaporation apparatus such as the guide-contact flow-down type polymerization apparatus constituting the polycarbonate manufacturing apparatus of the present embodiment, it is preferred for keeping the pressure of the inert gas-absorbed melted prepolymer at a predetermined pressure within a melted prepolymer supply piping from the inert gas absorption apparatus to the guide-contact flow-down type polymerization apparatus that a pressure regulating valve should be placed immediately before the entrance of the guide-contact flow-down type polymerization apparatus.

In the case of placing two or more guide-contact flow-down type polymerization apparatuses, an inert gas absorption apparatus for allowing an inert gas to be absorbed to a melted prepolymer to be supplied to each of the guide-contact flow-down type polymerization apparatuses is placed, and a pressure regulating valve that adjusts the pressure of the inert gas-absorbed melted prepolymer within a melted prepolymer supply piping from the inert gas absorption apparatus to each of the guide-contact flow-down type polymerization apparatuses is preferably placed immediately before the entrance of each of the guide-contact flow-down type polymerization apparatuses.

The inside of the guide-contact flow-down type polymerization apparatus has relatively high vacuum, and the melted prepolymer at or near a supply port to this guide-contact flow-down type polymerization apparatus tends to become a low-pressure state by aspiration into this apparatus. Hence, the inert gas absorbed in the inert gas absorption apparatus may be separated from the melted prepolymer and aggregated. Accordingly, for preventing these events, it is preferred to supply the inert gas to the guide-contact flow-down type polymerization apparatus while maintaining a pressure equal to or higher than the pressure at which the inert gas is absorbed to the melted prepolymer in the inert gas absorption apparatus. Specifically, the pressure is preferably in the range of 15 kPaA to 200 kPaA, more preferably 20 kPaA to 150 kPaA, further preferably 20 to 100 kPaA.

If the pressure regulating valve is not placed therein or if the pressure of the melted prepolymer to be supplied to the guide-contact flow-down type polymerization apparatus is lower than the pressure at which the inert gas is absorbed to the melted prepolymer, the pressure of the melted prepolymer within the piping is unstable so that the inert gas (e.g., nitrogen) temporarily absorbed to the melted prepolymer is separated or aggregated, resulting in unstable homogeneity of the melted prepolymer. This inhibits a uniform and continuous foaming phenomenon of the melted prepolymer within the guide-contact flow-down type polymerization apparatus. Thus, a stable product cannot be manufactured, or reduction in color, fisheye, or foreign matter such as a gel tends to occur easily.

On the other hand, if the pressure of the melted prepolymer to be supplied to the guide-contact flow-down type polymerization apparatus exceeds 200 kPaA, no effect is changed. Thus, a higher pressure is not practical because such a pressure places an excessive burden on a discharge gear pump or a piping of the inert gas absorption apparatus and requires improving pressure resistance. Therefore, the upper limit value is preferably 200 kPaA.

The polycarbonate manufacturing apparatus of the present embodiment may be any apparatus that satisfies various conditions mentioned above and has mechanical strength appropriate therefor, and may be provided with an apparatus or equipment having any of other functions necessary for continuous operation.

The polycarbonate manufacturing apparatus of the present embodiment may have a plurality of aforementioned guide-contact flow-down type polymerization apparatuses or inert gas absorption apparatuses joined or may be provided with an apparatus or equipment having any of other functions except for evaporation.

[Material for use in polycarbonate manufacturing]

Hereinafter, a dihydroxy compound and diaryl carbonate will be described which are materials for use in manufacturing polycarbonate using the polycarbonate manufacturing apparatus of the present embodiment.

Examples of the dihydroxy compound used in the present embodiment include aromatic dihydroxy compounds and aliphatic dihydroxy compounds.

(Aromatic dihydroxy compound)

The aromatic dihydroxy compound for use in manufacturing aromatic polycarbonate is a compound represented by the following formula:

HO-Ar-OH

wherein Ar represents a divalent aromatic group.

The divalent aromatic group Ar is defined as mentioned above.

In the case of manufacturing aromatic polycarbonate using the aromatic polycarbonate manufacturing apparatus

of the present embodiment, one of the aromatic dihydroxy compounds may be used singly, or two or more thereof may be used.

A preferred example of the aromatic dihydroxy compound is bisphenol A. A trivalent aromatic trihydroxy compound may be used in combination therewith for introducing a branched structure.

The bisphenol A is particularly preferably a high-purity product for polycarbonate having a chlorine content of 1 ppb or less.

(Diaryl carbonate)

The diaryl carbonate for use in manufacturing aromatic polycarbonate using the polycarbonate manufacturing apparatus of the present embodiment is represented by the following formula:

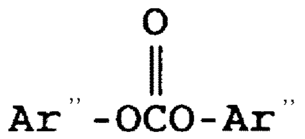

wherein Ar'' represents a monovalent aromatic group having 5 to 20 carbon atoms.

The diaryl carbonate is preferably symmetric diaryl carbonate such as unsubstituted diphenyl carbonate or lower alkyl-substituted diphenyl carbonate (e.g., ditolyl carbonate and di-t-butylphenyl carbonate), particularly preferably diphenyl carbonate which is diaryl carbonate having the simplest structure. Only one of these diaryl carbonates may be used singly, or two or more thereof may be used in combination.

A particularly preferred example of a method for manufacturing diphenyl carbonate serving as a raw material for manufacturing aromatic polycarbonate will be described below.

First, ethylene carbonate is manufactured through the reaction of ethylene oxide with $CO_2$ and purified, and dimethyl carbonate is manufactured through the reaction thereof with methanol and purified. Next, diphenyl carbonate is manufactured and purified by a reactive distillation method using the dimethyl carbonate and purified phenol. The diphenyl carbonate is an ultrahigh-purity product free from an alkali metal, an alkaline earth metal, and chlorine.

(Melted prepolymer)

The melted prepolymer for use in manufacturing aromatic polycarbonate using the polycarbonate manufacturing apparatus of the present embodiment is manufactured from the aromatic dihydroxy compound and the diaryl carbonate described above. The ratio (feed ratio) between these compounds used differs depending on the types of the aromatic dihydroxy compound and the diaryl carbonate used, a polymerization temperature, and other polymerization conditions. The diaryl carbonate is used at a ratio of usually 0.9 to 2.5 mol, preferably 0.95 to 2.0 mol, more preferably 0.98 to 1.5 mol, per mol of the aromatic dihydroxy compound.

The prepolymer in a melted state (melted prepolymer) manufactured from the aromatic dihydroxy compound and the diaryl carbonate means a melted product that is manufactured from the aromatic dihydroxy compound and the diaryl carbonate, is in the course of polymerization, and has a lower degree of polymerization than that of aromatic polycarbonate having the degree of polymerization of interest, and may be an oligomer, as a matter of course.

The melted polycarbonate prepolymer that can be manufactured in the polycarbonate manufacturing apparatus of the present embodiment may have any average degree of polymerization, which differs depending on its chemical structure and is usually approximately 2 to 2,000.

Such a melted prepolymer for use as a polymerization raw material may be obtained by any known method.

(Catalyst)

The reaction for manufacturing polycarbonate from the dihydroxy compound and the diaryl carbonate can be carried out without the addition of a catalyst and is performed, if necessary, in the presence of a catalyst in order to enhance a polymerization rate.

The catalyst is not particularly limited, and a conventionally known catalyst can be used.

Examples of the catalyst include: alkali metal and alkaline earth metal hydroxides such as lithium hydroxide, sodium hydroxide, potassium hydroxide, and calcium hydroxide; alkali metal salts, alkaline earth metal salts, and quaternary ammonium salts of boron and aluminum hydroxides such as lithium aluminum hydride, sodium borohydride, and tetramethylammonium borohydride; alkali metal and alkaline earth metal hydrides such as lithium hydride, sodium hydride, and calcium hydride; alkali metal and alkaline earth metal alkoxides such as lithium methoxide, sodium ethoxide,

and calcium methoxide; alkali metal and alkaline earth metal aryloxides such as lithium phenoxide, sodium phenoxide, magnesium phenoxide, LiO-Ar-OLi, and NaO-Ar-Ona (wherein Ar is an aryl group); organic acid salts of alkali metals and alkaline earth metals such as lithium acetate, calcium acetate, and sodium benzoate; zinc compounds such as zinc oxide, zinc acetate, and zinc phenoxide; boron oxide, boric acid, sodium borate, trimethyl borate, tributyl borate, and triphenyl borate; tin compounds such as tin oxide, dialkyl tin oxide, dialkyl tin carboxylate, tin acetate, tin compounds bonded to an alkoxy group or an aryloxy group (e.g., ethyl tin tributoxide), and organic tin compounds; lead compounds such as lead oxide, lead acetate, lead carbonate, basic carbonate, and alkoxides or aryloxides of lead and organic lead; and quaternary ammonium salts and quaternary phosphonium salts.

In the case of using a catalyst, only one of these catalysts may be used, or two or more thereof may be used in combination. The amount of such a catalyst used is in the range of usually $10^{-10}$ to 1% by mass, preferably $10^{-9}$ to $10^{-1}$% by mass, further preferably $10^{-8}$ to $10^{-2}$% by mass, based on the raw material dihydroxy compound.

The catalyst used remains in the product polycarbonate when a melt transesterification method is applied thereto. Most of these catalysts usually adversely affect the physical properties of the polymer. Thus, it is preferred to minimize the amount of the catalyst used.

Since the polycarbonate manufacturing apparatus of the present embodiment, and the guide-contact flow-down type polymerization apparatus efficiently perform polymerization, the amount of the catalyst used can be decreased. This is also one of the advantages of the polycarbonate manufacturing apparatus of the present embodiment that can manufacture high-quality polycarbonate.

The material of the guide-contact flow-down type polymerization apparatus or the piping constituting the polycarbonate manufacturing apparatus of the present embodiment is not particularly limited and is usually selected from a stainless steel material, a carbon steel material, metal materials such as Hastelloy, nickel, titanium, chromium, and other alloys, and a highly heat-resistant polymer material. The surface made of such a material may be variously treated, if necessary, by plating, lining, passivation treatment, acid washing, phenol washing, or the like. For example, stainless steel, nickel, or glass lining is preferred, and stainless steel is particularly preferred. A gear pump that can quantitatively discharge a highly viscous substance is usually preferably used as discharge pump 8 for a melted prepolymer or polycarbonate. The material of such a gear pump may be stainless steel or may be any of other special metals.

The polycarbonate to be manufactured in the polycarbonate manufacturing apparatus of the present embodiment has a repeat unit represented by the following formula:

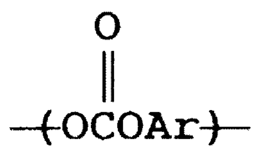

wherein Ar is defined as mentioned above.

The polycarbonate is particularly preferably polycarbonate containing 85 mol% or more of a repeat unit represented by the following formula in all repeat units:

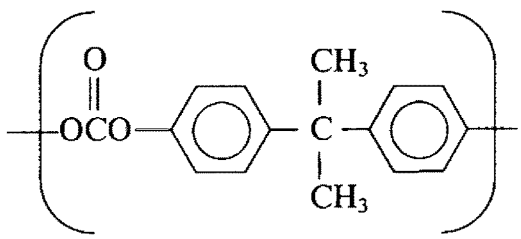

The terminal groups of the polycarbonate to be manufactured in the polycarbonate manufacturing apparatus of the present embodiment usually consist of a hydroxy group and an aryl carbonate group represented by the following formula:

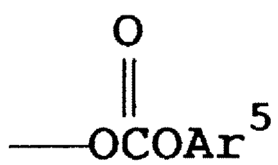

wherein $Ar^5$ is defined as mentioned above about Ar".

The ratio between the hydroxy group and the aryl carbonate group is not particularly limited and is usually in the range of hydroxy group:aryl carbonate group=95:5 to 5:95, preferably in the range of 90:10 to 10:90, further preferably in the range of 80:20 to 20:80. Polycarbonate in which the proportion of a phenyl carbonate group that occupies the terminal groups is 85 mol% or more is particularly preferred.

The polycarbonate to be manufactured in the polycarbonate manufacturing apparatus of the present embodiment may have a partially branched structure where a plurality of polycarbonate backbones are included, and such a plurality of polycarbonate backbones are bonded as a whole to at least one side chain via one branch selected from the group consisting of an ester bond and an ether bond.

Use of the polycarbonate manufacturing apparatus of the present embodiment can stably manufacture polycarbonate without variation in molecular weight for a long time.

The polycarbonate manufacturing apparatus of the present embodiment may be any apparatus that satisfies various conditions mentioned above and has mechanical strength appropriate therefor, and may be provided with an apparatus or equipment having any of other functions necessary for continuous polycarbonate manufacturing operation.

The polycarbonate manufacturing apparatus of the present embodiment may have a plurality of aforementioned guide-contact flow-down type polymerization apparatuses joined or may be provided with an apparatus or equipment having any of other functions except for polymerization.

In the polycarbonate manufacturing apparatus of the present embodiment, a known catalyst deactivator described in, for example, International Publication No. WO 2005/121213 may be used in manufacturing polycarbonate.

The amount of the catalyst deactivator used is preferably a ratio of 0.5 to 50 mol, more preferably a ratio of 0.5 to 10 mol, further preferably a ratio of 0.8 to 5 mol, per mol of the catalyst for polymerization. The catalyst deactivator is added to, for example, an extruder.

In a process of manufacturing polycarbonate using the polycarbonate manufacturing apparatus of the present embodiment, various additives may be added, and polycarbonate obtained in the second guide-contact flow-down type polymerization apparatuses 48A and 48B may be sent in a melted state from the second guide-contact flow-down type polymerization apparatuses 48A and 48B to their respective post-stage devices 50A and 50B.

The post-stage devices 50A and 50B are not particularly limited as long as the post-stage devices are conventional devices that receive melted polycarbonate. Examples thereof include extruders, pelletizers, sifters, dryers, silos, and packaging machines.

For example, melted polycarbonate is supplied to an extruder where the melted polycarbonate is then mixed with other resins such as ABS or PET, additives such as a thermal stabilizer, an antioxidant, a light stabilizer, an ultraviolet absorber, a mold release agent, and a flame retardant, and arbitrary other additives such as an organic or inorganic pigment or dye, a metal deactivator, an antistatic agent, a lubricant, and a nucleating agent.

One of these other resins and arbitrary additives may be used singly, or two or more thereof may be used in combination.

The polycarbonate to be manufactured in the polycarbonate manufacturing apparatus of the present embodiment may further contain an aliphatic dihydroxy compound (diol), for example, ethylene glycol, 1,4-butanediol, 1,4-cyclohexanedimethanol, and 1,10-decanediol; a dicarboxylic acid, for example, succinic acid, isophthalic acid, 2,6-naphthalenedicarboxylic acid, adipic acid, cyclohexanedicarboxylic acid, and terephthalic acid; and an oxy acid, for example, lactic acid, p-hydroxybenzoic acid and 6-hydroxy-2-naphthoic acid.

As is evident from the above description, use of the polycarbonate manufacturing apparatus of the present embodiment can continuously manufacture polycarbonate.

The polycarbonate obtained using the polycarbonate manufacturing apparatus of the present embodiment can undergo a predetermined molding step to obtain a molded product.

The molding step can be a known molding step, and the polycarbonate can be molded using, for example, an injection molding machine, an extrusion molding machine, a blow molding machine, or a sheet molding machine to obtain a molded product.

The obtained molded product can be used for a wide range of purposes such as automobiles, electricity, electronics, OA, optical media, building material, and medicine.

According to the polycarbonate manufacturing apparatus of the present embodiment and the method for assembling the same, high-quality and high-performance polycarbonate unlikely to be stained and to contain a foreign matter can be efficiently manufactured.

## Examples

Hereinafter, the present invention will be specifically described with reference to specific Example and Comparative Examples. However, the present invention is not limited by these Example and Comparative Examples by any means.

Raw materials of polycarbonate to be manufactured in each of the following Example and Comparative Examples will be given below.

[Raw material]

((1) Aromatic dihydroxy compound)
BPA-1: bisphenol A manufactured by NIPPON STEEL Chemical & Material Co., Ltd.
((2) Diaryl carbonate)
DPC-1: diphenyl carbonate manufactured by the method described in International Publication No. WO 2006/006585

Methods for measuring the physical properties and characteristics of polycarbonate to be manufactured in each of the following Example and Comparative Examples will be given below.

[Physical properties and characteristics]

((1) Number-average molecular weight (Mn))

The number-average molecular weight (Mn) of the polycarbonate was measured at a temperature of 40°C using gel permeation chromatography (HLC-8320GPC manufactured by Tosoh Corp., two columns of TSK-GEL Super Multipore HZ-M, RI detector) and using tetrahydrofuran as an eluent.

The molecular weight was determined using a polystyrene-based molecular weight calibration curve from standard monodisperse polystyrene (EasiVial manufactured by Varian Medical Systems, Inc.) according to the following formula:

$$M_{PC} = 0.3591 M_{PS}^{1.0388}$$

wherein $M_{PC}$ represents the number-average molecular weight of the polycarbonate, and $M_{PS}$ represents the number-average molecular weight of the polystyrene.

((2) Measurement of color)

Polycarbonate pellets dried at 120°C for 5 hours in a hot-air dryer were used. The pellets were continuously molded into 50 mm long × 90 mm wide × 3.0 mm thick test pieces in an injection molding machine having a cylinder temperature of 300°C and a mold temperature of 90°C to obtain test pieces.

The obtained test pieces were measured by the transmission method at a view angle of 10° using a spectrophotometric colorimeter (Vista manufactured by Hunter Associates Laboratory, Inc.) and a D65 light source, and the degree of yellowness was indicated by a b* value (CIE No. 15 (ASTM E308) specification).

((3) Measurement of amount of minute foreign matter)

1 g of the polycarbonate was dissolved in 200 mL methylene chloride. Measurement at 6 channels of from 0.5 to 1 μm, from 1 to 2 μm, from 2 to 5 μm, from 5 to 10 μm, from 10 to 20 μm, and 20 μm or more was performed using a particle counter (HIAC 8103 manufactured by Beckman Coulter, Inc.) in the solution, and a total number was calculated as the number of minute foreign matter contained in per g of the polycarbonate.

((4) Measurement of sulfate ion ($SO_4^{2-}$) and fluoride ion ($F^-$) concentrations)

The polycarbonate manufacturing apparatus of each of Example and Comparative Examples mentioned later was washed with an aqueous solution of alkali metal hydroxide, and sulfate ion and fluoride ion concentrations in the aqueous solution removed from the inside of the manufacturing apparatus were measured.

The measurement was performed at room temperature using ion chromatography (930 Compact IC Flex manufactured by Metrohm Japan Ltd., anion column Star-Ion A300 manufactured by Phenomenex), using an aqueous solution containing 1.191 g of $Na_2CO_3$ and 0.143 g of $NaHCO_3$ dissolved in 1 L of ultrapure water as an eluent, and using an aqueous solution containing 2.5 mL of $H_2SO_4$ dissolved in 1 L of ultrapure water as a suppressor liquid.

((5) Measurement of absorbance)

The polycarbonate manufacturing apparatus of each of Example and Comparative Examples mentioned later was washed with phenol, and difference between "absorbance at a wavelength of 400 nm" and "absorbance at a wavelength of 700 nm" of phenol removed from the inside of the manufacturing apparatus was calculated.
1 g of phenol used in the washing was dissolved in 7 mL of methylene chloride, and the absorbance of the solution was measured at wavelengths of 700 nm and 400 nm in a quartz cell having an optical path length of 1 cm using a spectrophotometer (MPS-2000 manufactured by Shimadzu Corp.) to determine (absorbance at 400 nm) - (absorbance at 700 nm).

[Example 1]

Polycarbonate manufacturing was performed as described below using a polycarbonate manufacturing apparatus having the configuration shown in Figure 5.
First, polymerization raw materials and a catalyst were added to mixing tank 31 and mixed.
Next, the mixture was transferred to dissolved mixture reservoirs 33A and 33B through transfer pump 32, and further transferred therefrom through transfer pumps 34A and 34B to first polymerization vessel 35 where prepolymerization was performed.
The resultant was further subjected to prepolymerization in second polymerization vessel 37 via gear pump 36 for discharge to obtain a polycarbonate prepolymer.
The polycarbonate prepolymer was transferred to first inert gas absorption apparatus 39 via supply pump 38, and after optional adjustment of the supply pressure of an inert gas-absorbed prepolymer to a guide-contact flow-down type polymerization apparatus by pressure regulating valve 41, transferred to first guide-contact flow-down type polymerization apparatus 42 where the prepolymer was polymerized. Here, a low-molecular-weight component phenol was discharged from a vent.
Examples of the pressure regulating valve 41 include valve-like configurations. The pressure regulating valve 41 is not limited by its configuration as long as the solubility of an inert gas can be adjusted. The same holds true for pressure regulating valves 47A and 47B given below.
Next, the polycarbonate prepolymer was transferred to second inert gas absorption apparatus 44 via supply pump 43 and further transferred therefrom using supply pumps 46A and 46B via three-way polymer valve 45. The supply pressure of an inert gas-absorbed prepolymer to a guide-contact flow-down type polymerization apparatus and optionally the solubility of an inert gas were adjusted by pressure regulating valves 47A and 47B, and the resultant was further transferred to second guide-contact flow-down type polymerization apparatuses 48A and 48B connected thereto where the prepolymer was polymerized. Here, phenol was discharged from a vent.
The resultant was further transferred through supply pumps 49A and 49B, and an additive was added to post-stage devices 50A and 50B to obtain the polycarbonate of interest.
Figure 1 shows a schematic configuration diagram of the first and second inert gas absorption apparatuses 39 and 44.
The inert gas absorption apparatuses 39 and 44 are substantially similar in apparatus configuration to guide-contact flow-down type polymerization apparatuses 42, 48A, and 48B mentioned later, so that the same reference signs are used to designate such similar sites.
As for the first inert gas absorption apparatus 39, in inert gas absorption zone 15 which is an internal space, the upper part of side casing 10 is in a cylindrical shape, and bottom casing 11 which is a tapered lower part constituting the side casing 10 has an inverted cone shape. In Figure 1, L = 500 cm, h = 400 cm, D = 200 cm, d = 20 cm, and C = 150°.
The external diameter of each guide 4 disposed in the inert gas absorption zone 50 which is an internal space is r = 0.3 cm. The total external surface area of the guides 4 is S = 60 $m^2$. The pore diameter of porous plate 2 disposed at the upper part of the inert gas absorption zone 15 which is an internal space is approximately 0.2 cm.
The second inert gas absorption apparatus 44 has almost the same shape as that of the first inert gas absorption apparatus 39 except that the pore diameter of the porous plate 2 is approximately 0.6 cm.
Figure 2 shows a schematic diagram of the guide-contact flow-down type polymerization apparatus. This guide-contact flow-down type polymerization apparatus has flow path control component 20 in a disc form having a thickness of approximately 2 cm, and guides 4 in a columnar form or a pipe form, as shown in Figure 3.
Figure 3 shows a schematic configuration diagram of the upper parts of the guides 4 of the guide-contact flow-down type polymerization apparatus.
In the guide-contact flow-down type polymerization apparatus, the flow path control component 20 is suspension-fixed from the upper part such that the interval from upper internal wall face 23 of liquid supply zone 3 is approximately 8 cm.
The interval between the internal sidewall face 22 of the liquid supply zone 3 and the flow path control component 20 is approximately 9 cm, and the interval between the porous plate 2 and the flow path control component 20 is

approximately 8 cm.

The marginal part of this flow path control component 20 in a disc form is tailored such that the perpendicular cross section is a semicircle having a radius of approximately 1 cm, and devised such that no liquid resides in the marginal part.

The cross section of the junction between the internal sidewall face 22 of the liquid supply zone 3 and the porous plate 2 is tailored such that the inside as shown in Figure 4 is in a concave form, and angle E of the rising part thereof is approximately 170 degrees (°).

The whole material of this guide-contact flow-down type polymerization apparatus is stainless steel.

Discharge pump 8 is preferably a gear pump for a highly viscous concentrated liquid and is a usual liquid sending pump for a concentrated liquid whose viscosity is not that high.

The configuration of the guide-contact flow-down type polymerization apparatus mentioned above is in common among first guide-contact flow-down type polymerization apparatus 42 and second guide-contact flow-down type polymerization apparatuses 48A and 48B described below.

The first guide-contact flow-down type polymerization apparatus 42 has side casing 10 in a cylindrical shape and bottom casing 11 in a cone shape. In Figure 2, L = 950 cm, and h = 850 cm.

The internal diameter of the side casing 10 in evaporation zone 5 is D = 400 cm, and the internal diameter of liquid discharge port 7 of the bottom casing 11 in a cone shape is d = 20 cm. C is 150 degrees (°).

The total external surface area of all the guides 4 is S = 750 $m^2$.

The internal cross-sectional area on a horizontal plane of the side casing 10 in the evaporation zone 5 which is an internal space is A = 12.56 $m^2$.

The ratio between the internal cross-sectional area A and internal cross-sectional area B ($m^2$) on a horizontal plane of the liquid discharge port 7 is A/B = 400.

D/d is 20.

The ratio between length L (cm) of the side casing 10 of the evaporation zone 5 and the internal diameter D (cm) is L/D = 2.375.

The external diameter of each guide 4 is r = 0.3 cm.

The average number of pores per $m^2$ of the porous plate 2 (number/$m^2$) is N = approximately 500.

The ratio between upper area T of the porous plate 2 including the upper areas of the pores of the porous plate 2, and total effective cross-sectional area Q of the pores is T/Q = approximately 1300.

Interval K between the guide 4 closest to the internal wall face of the evaporation zone 5 and the internal wall face is approximately 14 cm.

In the first guide-contact flow-down type polymerization apparatus 42, the ratio between space volume V (approximately 2.03 $m^3$) where a liquid can exist in the liquid supply zone 3 from liquid feed port 1 (junction between the feed port and the upper internal wall of the liquid supply zone) to the upper face of the porous plate 2, and upper area T (approximately 12.56 $m^2$) of the porous plate 2 including the upper areas of the pores of the porous plate 2, i.e., the value of V/T, is approximately 0.162 (m).

Space volume Y of the evaporation zone 5 is approximately 135 $m^3$.

The ratio between the space volume V where a liquid can exist in the liquid supply zone 3 from the liquid feed port 1 to the upper face of the porous plate 2, and the space volume Y of the evaporation zone 5, i.e., the value of Y/V, is approximately 67.

In Example 1, the first guide-contact flow-down type polymerization apparatus in the polycarbonate manufacturing apparatus satisfied all of the formula (I) to the formula (XV) mentioned above.

A low-boiling substance-containing liquid supplied from the liquid feed port 1 to the liquid supply zone 3 in Figure 2 passes through between the upper face of the flow path control component 20 and the upper internal wall face 23 of the supply zone 3 and between the internal sidewall face 22 of the supply zone 3 and the flow path control component 20 in Figure 3, and are uniformly distributed to the guides 4 from the pores (21, etc.) of the porous plate 2 while flowing mainly in a direction from the peripheral part of the porous plate 2 toward the central part.

The guide-contact flow-down type polymerization apparatus is provided at its lower part with inert gas supply port 9 and provided at its upper part with vacuum vent 6 (which is usually connected to a gas aggregating machine and a pressure reduction apparatus) serving as a low-boiling substance evaporant extraction port.

A jacket or a heating tube for a heat medium is placed outside the guide-contact flow-down type polymerization apparatus such that a predetermined temperature can be retained with a heat medium.

The second guide-contact flow-down type polymerization apparatuses 48A and 48B have flow path control component 20 in a disc form having a thickness of approximately 2 cm, and guides 4 in the structure shown in Figure 3.

The flow path control component 20 in a disc form is suspension-fixed from the upper part such that the interval from upper internal wall face 23 of liquid supply zone is approximately 8 cm.

The interval between the internal sidewall face 22 of the liquid supply zone 3 and the flow path control component 20 is approximately 9 cm, and the interval between the porous plate 2 and the flow path control component 20 is

approximately 8 cm.

The marginal part of this flow path control component 20 in a disc form is tailored such that the perpendicular cross section is a semicircle having a radius of approximately 1 cm, and devised such that no liquid resides in the marginal part.

The cross section of the junction between the internal sidewall face 22 of the liquid supply zone 3 and the porous plate 2 is tailored such that the inside as shown in Figure 4 is in a concave form, and angle E of the rising part thereof is approximately 170 degrees (°).

The whole material of the second guide-contact flow-down type polymerization apparatuses 48A and 48B is stainless steel.

Discharge pump 8 is disposed at the lower parts of the second guide-contact flow-down type polymerization apparatuses 48A and 48B, and is preferably a gear pump for a highly viscous concentrated liquid and is preferably a usual liquid sending pump for a concentrated liquid whose viscosity is not that high.

The second guide-contact flow-down type polymerization apparatuses 48A and 48B have side casing 10 in a cylindrical shape and bottom casing 11 in a cone shape.

The second guide-contact flow-down type polymerization apparatuses 48A and 48B have L of 1,000 cm and h of 900 cm in Figure 2.

The internal diameter of the side casing 10 in evaporation zone 5 is D = 500 cm, and the internal diameter of liquid discharge port 7 of the bottom casing 11 in a cone shape is d = 40 cm. C is 155 degrees (°).

The total external surface area of all the guides 4 is S = 250 $m^2$.

The internal cross-sectional area on a horizontal plane of the side casing 10 in the evaporation zone 5 which is an internal space is A = 19.625 $m^2$.

The ratio between the internal cross-sectional area A and internal cross-sectional area B ($m^2$) on a horizontal plane of the liquid discharge port 7 is A/B = 156.25.

D/d is 12.5.

The ratio between length L (cm) of the side casing 10 of the evaporation zone 5 and the internal diameter D (cm) is L/D = 2.

The external diameter of each guide 4 is r = 0.3 cm.

The average number of pores per $m^2$ of the porous plate 2 (number/$m^2$) is N = approximately 140.

The pore diameter of the porous plate 2 is approximately 0.4 cm.

The ratio between upper area T of the porous plate 2 including the upper areas of the pores of the porous plate 2, and total effective cross-sectional area Q of the pores is T/Q = approximately 470.

Interval K between the guide 4 closest to the internal wall face of the evaporation zone 5 and the internal wall face is approximately 15 cm.

In the second guide-contact flow-down type polymerization apparatuses 48A and 48B, the ratio between space volume V (approximately 3.17 $m^3$) where a liquid can exist in the liquid supply zone 3 from liquid feed port 1 (junction between the feed port and the upper internal wall of the liquid supply zone) to the upper face of the porous plate 2, and upper area T (approximately 19.63 $m^2$) of the porous plate 2 including the upper areas of the pores, i.e., the value of V/T, is approximately 0.161 (m) .

Space volume Y of the evaporation zone 5 is approximately 222.8 $m^3$, and the ratio between the space volume V where a liquid can exist in the liquid supply zone 3 from the liquid feed port 1 to the upper face of the porous plate 2, and the space volume Y of the evaporation zone 5, i.e., the value of Y/V, is approximately 70.

In Example 1, the second guide-contact flow-down type polymerization apparatuses 48A and 48B in the polycarbonate manufacturing apparatus satisfied all of the formula (I) to the formula (XV) mentioned above.

The second guide-contact flow-down type polymerization apparatuses 48A and 48B have the same structure of the liquid supply zone 3 as that of the first guide-contact flow-down type polymerization apparatus 42.

The ratio between total external surface area S1 ($m^2$) of the guides 4 in the first guide-contact flow-down type polymerization apparatus 42 and total external surface area S2 ($m^2$) of the guides 4 in one second guide-contact flow-down type polymerization apparatus (48A or 48B) is S1/S2 = 750/250 = 3.

The whole materials of the inert gas absorption apparatuses 39 and 44 and the first and second guide-contact flow-down type polymerization apparatuses 42, 48A, and 48B mentioned above are stainless steel except for the discharge pump 8.

At a production stage of the polycarbonate manufacturing apparatus, the respective metal surfaces that came into contact with an internal fluid, of the liquid supply zone 3, the side casing 10, and the bottom casing 11 were polished with an abrasive corresponding to buff #400 until the metal surfaces had arithmetic average roughness (Ra) of 0.2 μm or less.

At a washing step of the polycarbonate manufacturing apparatus, the metal surfaces were first washed with water using a water jet of 0.4 MPaG. Then, the application of a water-soluble mineral oil detergent (FD-20, NEOS Co., Ltd.) and rinsing by a water jet of 0.4 MPaG were repeated twice. Then, the metal surfaces were dried by the spraying

of dry air through a filter having an aperture of 0.2 μm. Then, a test of contact between the metal surface and a nonwoven fabric was conducted, and the washing described above was repeated until the nonwoven fabric thus contacted no longer had dirt.

At a storage stage of the polycarbonate manufacturing apparatus, in order to prevent contamination by foreign matter from the outside, the openings of nozzles, etc. of the polycarbonate manufacturing apparatus were tightly blocked with a vinyl chloride film. Then, a transparent plastic bag and a plywood were mounted thereonto for protection, and finally fixed with a tacky tape.

At an installation stage of the polycarbonate manufacturing apparatus, in order to prevent contamination by foreign matter from the outside, the openings of the nozzles, etc. of the polycarbonate manufacturing apparatus were connected to their adjacent apparatuses or pipings in a state protected within a dust cover made of a polyethylene material.

After installation of the polycarbonate manufacturing apparatus in a factory, cycle operation in which an ordinary-temperature aqueous solution containing a potassium hydroxide reagent (purity: 85 wt%) at a ratio of 1 g per t of pure water was supplied at 30 $m^3$/h from the liquid feed port 1 and at the same time, extracted from extraction port 12 was carried out for 5 hours.

Next, the aqueous solution was reserved inside the polycarbonate manufacturing apparatus (in the inert gas absorption apparatuses and the first and second guide-contact flow-down type polymerization apparatuses) and held for 1 hour, followed by the extraction of the whole amount.

The extracted aqueous potassium hydroxide solution was sampled, and the total concentration of a sulfate ion ($SO_4^{2-}$) and a fluoride ion (F-) contained in the aqueous solution was measured using an ion chromatograph. The washing described above was repetitively carried out until the measurement results were 100 ppb or less.

In Example 1, 100 ppb or less was attained in the first run.

The polycarbonate manufacturing apparatus thus washed was subjected to a leak test, nitrogen purge, and temperature elevation and then washed with phenol.

First, phenol of 150°C was supplied at 30 $m^3$/h from the liquid feed port 1 to above the internal porous plates 2 of the inert gas absorption apparatuses and the first and second guide-contact flow-down type polymerization apparatuses constituting the polycarbonate manufacturing apparatus until nearly flooded with the liquid.

Next, phenol was supplied at 10 $m^3$/h from the extraction port 12 such that the whole inside of the inert gas absorption apparatuses and the first and second guide-contact flow-down type polymerization apparatuses constituting the polycarbonate manufacturing apparatus was flooded with the liquid.

This state flooded with the liquid was held for 2 hours, followed by the extraction of the whole amount.

The extracted phenol was sampled, and the washing with phenol described above was repetitively carried out, if necessary, until results of measuring difference between "absorbance at 400 nm" and "absorbance at 700 nm" of the phenol using a spectrophotometer were 0.001 or less.

In Example 1, 0.001 or less was attained in the first run.

Likewise, mixing tank 31, dissolved mixture reservoirs 33A and 33B, stirring vessel type first polymerization vessel 35, stirring vessel type second polymerization vessel 37, first inert gas absorption apparatus 39, second inert gas absorption apparatus 44, connection pipings, and the like in Figure 5 were also washed with an aqueous potassium hydroxide solution as mentioned above, and after the washing, subjected to a leak test, nitrogen purge, and temperature elevation. Then, the apparatuses were washed with phenol.

Polycarbonate was manufactured using a polycarbonate manufacturing apparatus in which, as shown in Figure 5, two inert gas absorption apparatuses (first inert gas absorption apparatus 39 and second inert gas absorption apparatus 44) and two guide-contact flow-down type polymerization apparatuses (first guide-contact flow-down type polymerization apparatus 42 and second guide-contact flow-down type polymerization apparatuses 48A and 48B) were arranged and connected in series in the order of the first inert gas absorption apparatus 39, the first guide-contact flow-down type polymerization apparatus 42, the second inert gas absorption apparatus 44, and the second guide-contact flow-down type polymerization apparatuses (these two apparatuses were arranged in parallel).

The mixing tank 31 (internal capacity: 120 $m^3$) was charged with 40 tons of melted diphenyl carbonate (DPC-1) of 160°C.

Subsequently, potassium hydroxide as a catalyst was added at 120 ppb by mass in terms of the amount of potassium per 45 tons of bisphenol A (BPA-1), and bisphenol A was added thereto over 1.8 hours while the temperature of the mixed liquid within the mixing tank was kept at 100°C or higher.

The amount of the bisphenol A added was 45.3 tons.

Subsequently, 8.9 tons of diphenyl carbonate were further added thereto such that the molar ratio of the diphenyl carbonate to the bisphenol A was 1.15. The amount of the diphenyl carbonate added was weighed using a Coriolis mass flowmeter, and the amount of the bisphenol A added was weighed using a measuring hopper provided with a load cell meter.

At the point in time when the temperature of the mixed liquid reached 180°C, the mixed liquid was transferred to the dissolved mixture reservoir (internal capacity: 120 $m^3$) 33A over 1 hour.

The reaction mixture retained for 4 to 6 hours in the dissolved mixture reservoir 33A was filtered at a flow rate of 14 ton/hr through two polymer filters differing in pore diameter (not shown; pore diameter: 5 μm on the upstream side and 2.5 μm on the downstream side) arranged in series between the dissolved mixture reservoir 33A and the stirring vessel type first polymerization vessel 35.

The reaction mixture thus filtered was heated in a preheater (not shown) and supplied to the stirring vessel type first polymerization vessel 35. The liquid temperature at the exit of the preheater was 230°C.

At the point in time when the amount of the reaction mixture in the dissolved mixture reservoir 33A was decreased to a level lower than a predetermined value, the source of supply of the reaction mixture to the stirring vessel type first polymerization vessel 35 was switched from the dissolved mixture reservoir 33A to the dissolved mixture reservoir 33B. The supply of the reaction mixture to the stirring vessel type first polymerization vessel 35 was continuously performed by repeating the operation of alternately switching the source of supply between the dissolved mixture reservoirs 33A and 33B every 3.9 hours.

In both the dissolved mixture reservoirs 33A and 33B, an internal coil and jacket were placed, and 180°C was retained.

Stirring was performed under reduced pressure in the stirring vessel type first polymerization vessel 35 and the stirring vessel type second polymerization vessel 37 where the reaction mixture was polymerized while generated phenol was removed to obtain a prepolymer.

In this respect, the stirring vessel type first polymerization vessel 35 had a temperature of 230°C and a pressure of 9.3 kPaA, and the stirring vessel type second polymerization vessel 36 had a temperature of 265°C and a pressure of 2.9 kPaA.

The obtained melted polycarbonate prepolymer (number-average molecular weight Mn: 2,150) was continuously supplied to the liquid supply zone 3 from the liquid feed port 1 of the first inert gas absorption apparatus 39 through the supply pump 38.

The prepolymer continuously supplied to the inert gas absorption zone 15 which was an internal space through the porous plate 2 serving as a distributor plate of the first inert gas absorption apparatus 39 absorbed an inert gas while flowing down along the guides 4.

The pressure of the inert gas absorption zone 15 which was an internal space of the first inert gas absorption apparatus 39 was kept at 180 kPaA by supplying nitrogen gas from the inert gas supply port 9.

The melted prepolymer (which contained 0.04 NL of nitrogen per kg of the melted prepolymer) that dropped from the lower parts of the guides 4 to the bottom casing 11 which was a tapered lower part of the casing of the first inert gas absorption apparatus 39 was continuously discharged through the discharge pump 8 (in Figure 5, which corresponds to reference number 40) such that the amount was almost constant at the bottom of the first inert gas absorption apparatus. The pressure of the melted prepolymer entering a valve was kept at 200 kPaA by the pressure regulating valve 41 located in the liquid feed port 1 of the first guide-contact flow-down type polymerization apparatus 42, and the melted prepolymer was continuously supplied to the liquid supply zone 3 through the liquid feed port 1 of the first guide-contact flow-down type polymerization apparatus 42.

The pressure of the evaporation zone 5 which was an internal space of the first guide-contact flow-down type polymerization apparatus 42 was kept at 800 PaA through the vacuum vent 6.

The melted polycarbonate prepolymer with an elevated degree of polymerization (number-average molecular weight Mn: 4,600) that dropped from the lower parts of the guides 4 to the bottom casing 11 which was a tapered lower part of the casing of the first guide-contact flow-down type polymerization apparatus 42 was continuously extracted at a constant flow rate from the liquid discharge port 7 through the discharge pump 8 (in Figure 5, which corresponds to reference number 43) such that the amount was almost constant at the bottom. Subsequently, the extracted prepolymer was continuously supplied to the liquid supply zone 3 of the second inert gas absorption apparatus 44.

The melted prepolymer was continuously supplied to the inert gas absorption zone 15 which was an internal space through the porous plate 2 serving as a distributor plate of the second inert gas absorption apparatus 44.

The melted prepolymer absorbed an inert gas while flowing down along the guides 4.

The pressure of the inert gas absorption zone 15 which was an internal space of the second inert gas absorption apparatus 44 was kept at 200 kPaA by supplying nitrogen gas from the inert gas supply port 9.

The melted prepolymer (which contained 0.05 NL of nitrogen per kg of the melted prepolymer) that dropped from the lower parts of the guides 4 to the bottom casing 11 which was a tapered lower part of the casing of the second inert gas absorption apparatus was divided into two portions (at a ratio of 50:50) by the three-way polymer valve 45 and continuously discharged in a constant amount through the discharge pumps 8 (in Figure 5, which correspond to reference numbers 46A and 46B) such that the amount was almost constant at the bottom. The pressure of the melted prepolymer entering a valve was kept at 200 kPaA by the pressure regulating valves (47A and 47B) located in the liquid feed ports 1 of the second guide-contact flow-down type polymerization apparatuses 48A and 48B, and the melted prepolymer was continuously supplied to the respective supply zones 3 of the second guide-contact flow-down type polymerization apparatuses 48A and 48B.

The melted prepolymer continuously supplied to the evaporation zone 5 which was an internal space through the porous plate 2 serving as a distributor plate in each of the second guide-contact flow-down type polymerization apparatuses 48A and 48B underwent polymerization reaction while flowing down along the guides 4.
The pressure of the evaporation zone 5 which was an internal space of each of the second guide-contact flow-down type polymerization apparatuses 48A and 48B was kept at 110 PaA through the vacuum vent 6.
The polycarbonate that dropped from the lower parts of the guides 4 to the bottom casing 11 which was a tapered lower part of the casing of each of the second guide-contact flow-down type polymerization apparatuses 48A and 48B was continuously extracted as a strand from the post-stage device (50A or 50B) through the discharge pump 8 (49A or 49B) such that the amount was almost constant at the bottom. The strand was cooled and then cut to obtain polycarbonate pellets.
The yield in each of the polymerization apparatuses was 4.0 ton/hr (a total of 8.0 ton/hr). No additive was added.
Mn of the polycarbonate extracted after 250 hours, 500 hours, 1,000 hours, 2,000 hours, 3,000 hours, 4,000 hours, and 5,000 hours from the start of polycarbonate manufacturing was 10,400, 10,650, 10,500, 10,540, 10,520, 10,480, 10,550, and 10,450, respectively.
The color was 0.24 to 0.26.
As described above, both the Mn and the color were stable.
Neither stained matter nor contamination by impurities such as visible foreign matter based on long-term residence was detected.
The number of minute foreign matter was 11,000 or less in total and was found to satisfy a criterion of 80,000 or less which is a management value.

[Comparative Example 1]

In the construction of the same polycarbonate manufacturing apparatus as in the [Example 1], the metal surfaces that came into contact with an internal fluid were polished with an abrasive corresponding to buff #100 (Ra was 0.78 μm).
Then, none of the washing of the metal surface by a water jet, the application of a water-soluble mineral oil detergent (FD-20, NEOS Co., Ltd.), and rinsing by a water jet of 0.4 MPaG were carried out.
Neither the test of contact between the metal surface and a nonwoven fabric nor the operation of tightly blocking the openings of nozzles, etc. of the apparatus with a vinyl chloride film in order to prevent contamination by foreign matter from the outside at the storage stage of the polycarbonate manufacturing apparatus was carried out.
At the installation stage of the polycarbonate manufacturing apparatus, the openings of the nozzles, etc. of the apparatus were connected to their adjacent apparatuses or pipings without placing the dust cover made of a polyethylene material.
Then, washing with an aqueous potassium hydroxide solution was carried out once in the same manner as in the [Example 1], and the total concentration of a (sulfate ion ($SO_4^{2-}$) and a fluoride ion (F-) was measured and was consequently 5.3 ppm.
The polycarbonate manufacturing apparatus was subjected to a leak test, nitrogen purge, and temperature elevation and then washed with phenol once, and difference between "absorbance at a wavelength of 400 nm" and "absorbance at a wavelength of 700 nm" was measured and was consequently 0.37.
Polycarbonate manufacturing was started in the same manner as in the [Example 1]. However, polymerization for polycarbonate did not progress, and a very low viscous prepolymer-like substance stained brown was discharged from the post-stage device 50A of the guide-contact flow-down type polymerization apparatus and was impossible to extract as a strand.
The manufacturing was discontinued because no large change was obtained even after a lapse of 150 hours from the start of manufacturing.

[Comparative Example 2]

After the polycarbonate manufacturing was discontinued in the [Comparative Example 1], the polycarbonate manufacturing apparatus was washed with phenol by the same method as in the [Example 1] to remove residues from the inside, and the phenol was removed. Then, the temperature was lowered, followed by nitrogen purge. The apparatus was further washed with an aqueous potassium hydroxide solution and with phenol in the same manner as in the [Example 1] until reaching their respective prescribed values or less. Then, polycarbonate manufacturing was started in the same manner as in the [Example 1].
Mn of the polycarbonate extracted after 250 hours, 500 hours, 1,000 hours, 2,000 hours, 3,000 hours, 4,000 hours, and 5,000 hours from the start of manufacturing was 10,600, 10,500, 10,450, 10,600, 10,450, 10,540, 10,510, and 10,430, respectively. The color was 0.29 to 0.34.
As described above, the color was reduced as compared with the [Example 1], though the Mn was stable.

Neither stained matter nor contamination by impurities such as visible foreign matter based on long-term residence was detected.

The number of minute foreign matter was 22,000 to 38,000 and was drastically increased as compared with the [Example 1], though falling below the management value of 80,000 or less.

The present application is based on Japanese

Patent Application No. 2021-053222 filed on March 26, 2021 in the Japan Patent Office, the contents of which are incorporated herein by reference.

Industrial Applicability

The method for assembling a polycarbonate manufacturing apparatus and the polycarbonate manufacturing apparatus according to the present invention have industrial applicability in the manufacturing field of high-quality polycarbonate.

Reference Signs List

1: Liquid feed port
2: Porous plate
3: Liquid supply zone
4: Guide
5: Evaporation zone which is an internal space
6: Vacuum vent
7: Liquid discharge port
8: Discharge pump
9: Inert gas supply port
10: Side casing
11: Bottom casing
12: Extraction port
15: Inert gas absorption zone which is an internal space
20: Flow path control component
21: Pore part of the porous plate
22: Internal sidewall face of the liquid supply zone
23: Upper internal wall face of the liquid supply zone
31: Mixing tank
32, 34A, and 34B: Transfer pump
33A and 33B: Dissolved mixture reservoir
35: First polymerization vessel
36: Gear pump for discharge
38, 40, 43, 46A, 46B, 49A, and 49B: Supply pump
37: Second polymerization vessel
39: First inert gas absorption apparatus
41, 47A, and 47B: Pressure regulating valve
42: First guide-contact flow-down type polymerization apparatus
44: Second inert gas absorption apparatus
45: Three-way polymer valve
48A and 48B: Second guide-contact flow-down type polymerization apparatus
50A: Post-stage device
50B: Post-stage device

## Claims

1. A method for assembling a polycarbonate manufacturing apparatus comprising a plurality of apparatus elements, in which the method comprising:

protecting an opening of each apparatus element,
wherein the apparatus element is prepared by:

polishing at least a portion of a metal surface that comes into contact with an internal fluid of the apparatus element with an abrasive corresponding to buff #400, and
washing the polished metal surface until becoming a state where no dirt is attached to a nonwoven fabric in a test of contact between the metal surface and the nonwoven fabric; and

connecting the opening of the apparatus element to the opening of another apparatus element within a dust cover.

**2.** A polycarbonate manufacturing apparatus, wherein at least a portion of a metal surface that comes into contact with an internal fluid has an arithmetic average roughness (Ra) of 0.25 μm or less.

**3.** The polycarbonate manufacturing apparatus according to claim 2, wherein
the inside of the polycarbonate manufacturing apparatus is washed with an aqueous solution of alkali metal hydroxide so that a total value of a sulfate ion ($SO_4^{2-}$) concentration and a fluoride ion (F-) concentration in the aqueous solution removed from the inside of the polycarbonate manufacturing apparatus is 150 ppb or less.

**4.** The polycarbonate manufacturing apparatus according to claim 3, wherein
the inside of the polycarbonate manufacturing apparatus is washed with an aromatic monohydroxy compound after washing with the aqueous solution of alkali metal hydroxide so that difference between "absorbance at 400 nm" and "absorbance at 700 nm" of the aromatic monohydroxy compound removed from the inside of the polycarbonate manufacturing apparatus is 0.002 or less.

**5.** The polycarbonate manufacturing apparatus according to any one of claims 2 to 4, wherein

the polycarbonate manufacturing apparatus has a guide-contact flow-down type polymerization apparatus that allows a polycarbonate prepolymer to flow down along an external surface of a guide having no heating source in itself, while evaporating a low-boiling substance, wherein
the guide-contact flow-down type polymerization apparatus satisfies the following <condition (1)> to <condition (9)>:

<condition (1)>
having: a liquid feed port; a liquid supply zone for supplying a liquid to a guide of an evaporation zone through a porous plate; the evaporation zone provided with a plurality of guides extending downward from the porous plate in a space surrounded by the porous plate, a side casing, and a bottom casing; a vacuum vent disposed in the evaporation zone; and a liquid discharge port disposed in a lowermost part of the bottom casing;
<condition (2)>
a flow path control component having a function by which a liquid to be supplied from the liquid feed port to the porous plate flows in a direction from a peripheral part of the porous plate toward a central part in the liquid supply zone is placed in the liquid supply zone;
<condition (3)>
internal cross-sectional area A ($m^2$) on a horizontal plane of the side casing of the evaporation zone satisfies the following formula (I):

$$0.7 \leq A \leq 300 \quad \text{formula (I);}$$

<condition (4)>
a ratio between the internal cross-sectional area A ($m^2$) and internal cross-sectional area B ($m^2$) on a horizontal plane of the liquid discharge port satisfies the following formula (II):

$$20 \leq A/B \leq 1000 \quad \text{formula (II);}$$

<condition (5)>
the bottom casing constituting the bottom of the evaporation zone is connected to the upper side casing at

an angle of C degrees with respect to the inside thereof, wherein the angle of C degrees (°) satisfies the following formula (III):

$$110 \leq C \leq 165 \quad \text{formula (III)};$$

<condition (6)>
length h (cm) of the guide satisfies the following formula (IV):

$$150 \leq h \leq 5000 \quad \text{formula (IV)};$$

<condition (7)>
total external surface area S ($m^2$) of all the plurality of guides satisfies the following formula (V):

$$2 \leq S \leq 50000 \quad \text{formula (V)};$$

<condition (8)>
average number N of pores per $m^2$ of the porous plate (number/$m^2$) satisfies the following formula (VI):

$$50 \leq N \leq 3000 \quad \text{formula (VI)};$$

and
<condition (9)>
a ratio between upper area T ($m^2$) of the porous plate including upper areas of the pores of the porous plate and total effective cross-sectional area Q ($m^2$) of the pores satisfies the following formula (VII):

$$50 \leq T/Q \leq 3000 \quad \text{formula (VII)}.$$

**6.** The polycarbonate manufacturing apparatus according to claim 5, wherein the amount of the liquid subjected to evaporation treatment is 1 or more ton per hour.

**7.** The polycarbonate manufacturing apparatus according to claim 5 or 6, wherein
angle E (°) formed by an internal sidewall face of the liquid supply zone and the porous plate satisfies the following formula (VIII):

$$100 \leq E < 180 \quad \text{formula (VIII)}.$$

**8.** The polycarbonate manufacturing apparatus according to any one of claims 5 to 7, wherein
distance K (cm) between the guide closest to an internal wall face of the side casing of the evaporation zone and the internal wall face satisfies the following formula (IX):

$$5 \leq K \leq 50 \quad \text{formula (IX)}.$$

**9.** The polycarbonate manufacturing apparatus according to any one of claims 5 to 8, wherein

the side casing of the evaporation zone is in a cylindrical shape with internal diameter D (cm) and length L (cm), the bottom casing connected to an underpart of the side casing is in a cone shape, and the liquid discharge port at the lowermost part of the bottom casing in a cone shape is in a cylindrical shape with internal diameter d (cm), wherein
D, L, and d satisfy the following formulas (X), (XI), (XII), and (XIII):

$$100 \leq D \leq 1800 \quad \text{formula (X)}$$

$$5 \leq D/d \leq 50 \quad \text{formula (XI)}$$

$$0.5 \leq L/D \leq 30 \quad \text{formula (XII))}$$

$$h - 20 \leq L \leq h + 300 \quad \text{formula (XIII)}$$

wherein in the formula (XIII), h (cm) represents the length of the guide.

**10.** The polycarbonate manufacturing apparatus according to any one of claims 5 to 9, wherein
space volume V ($m^3$) where a liquid can exist in the liquid supply zone from the liquid feed port to an upper face of the porous plate, and upper area T ($m^2$) of the porous plate including upper areas of the pores of the porous plate satisfy the following formula (XIV):

$$0.02 \text{ (m)} \leq V/T \leq 0.5 \text{ (m)} \quad \text{formula (XIV).}$$

**11.** The polycarbonate manufacturing apparatus according to any one of claims 5 to 10, wherein

at least one of the guides is in a columnar form with external diameter r (cm), or in a pipe form that inhibits a liquid and/or a gaseous substance from entering the inside, wherein
the external diameter r satisfies the following formula (XV):

$$0.1 \leq r \leq 1 \quad \text{formula (XV).}$$

**12.** The polycarbonate manufacturing apparatus according to any one of claims 5 to 11, wherein
the polycarbonate manufacturing apparatus has the plurality of guides, and the plurality of guides are joined through a supporting material.

**13.** The polycarbonate manufacturing apparatus according to claim 12, wherein

the plurality of guides are selected from the group consisting of
grid-like or net-like guides in which the individual guides are fixed through a transverse supporting material, steric guides in which a plurality of grid-like or net-like guides are anteroposteriorly arranged and fixed through a transverse supporting material, and jungle gym-like steric guides in which a plurality of individual guides are anteroposteriorly and laterally fixed through a transverse supporting material.

**14.** The polycarbonate manufacturing apparatus according to any one of claims 5 to 13, wherein

the guide-contact flow-down type polymerization apparatus is further connected with at least one guide-contact flow-down type polymerization apparatus that satisfies the <condition (1)> to <condition (9)>, wherein
the two or more guide-contact flow-down type polymerization apparatuses are connected in series, in parallel, or both in series and in parallel.

**15.** The polycarbonate manufacturing apparatus according to claim 14, wherein

the guide-contact flow-down type polymerization apparatus is further connected with one guide-contact flow-down type polymerization apparatus, wherein
total external surface area S1 ($m^2$) of the guides of the guide-contact flow-down type polymerization apparatus, and
total external surface area S2 ($m^2$) of the guides of the further connected guide-contact flow-down type polymerization apparatus

satisfy the following formula (XVI):

$$1 \leq S1/S2 \leq 20 \ldots \text{formula (XVI)}.$$

**16.** The polycarbonate manufacturing apparatus according to any one of claims 5 to 15, wherein

the polycarbonate manufacturing apparatus further has an inert gas absorption apparatus for allowing an inert gas to be absorbed to a melted polycarbonate prepolymer before supply to the guide-contact flow-down type polymerization apparatus, wherein
the inert gas-absorbed melted prepolymer is supplied such that a pressure thereof within a melted prepolymer supply piping from the inert gas absorption apparatus to the guide-contact flow-down type polymerization apparatus is kept at 15 kPaA to 200 kPaA by a pressure regulating valve placed immediately before the entrance of the guide-contact flow-down type polymerization apparatus.

**17.** The polycarbonate manufacturing apparatus according to claim 14 or 15, wherein

the guide-contact flow-down type polymerization apparatus and the further connected guide-contact flow-down type polymerization apparatus are each connected with an inert gas absorption apparatus for allowing an inert gas to be absorbed to a melted polycarbonate prepolymer before supply to each of the guide-contact flow-down type polymerization apparatuses, wherein
the inert gas-absorbed melted prepolymer is supplied such that a pressure thereof within a melted prepolymer supply piping from the inert gas absorption apparatus to each of the guide-contact flow-down type polymerization apparatuses is kept at 15 kPaA to 200 kPaA by a pressure regulating valve placed immediately before the entrance of each of the guide-contact flow-down type polymerization apparatuses.

[Figure 1]

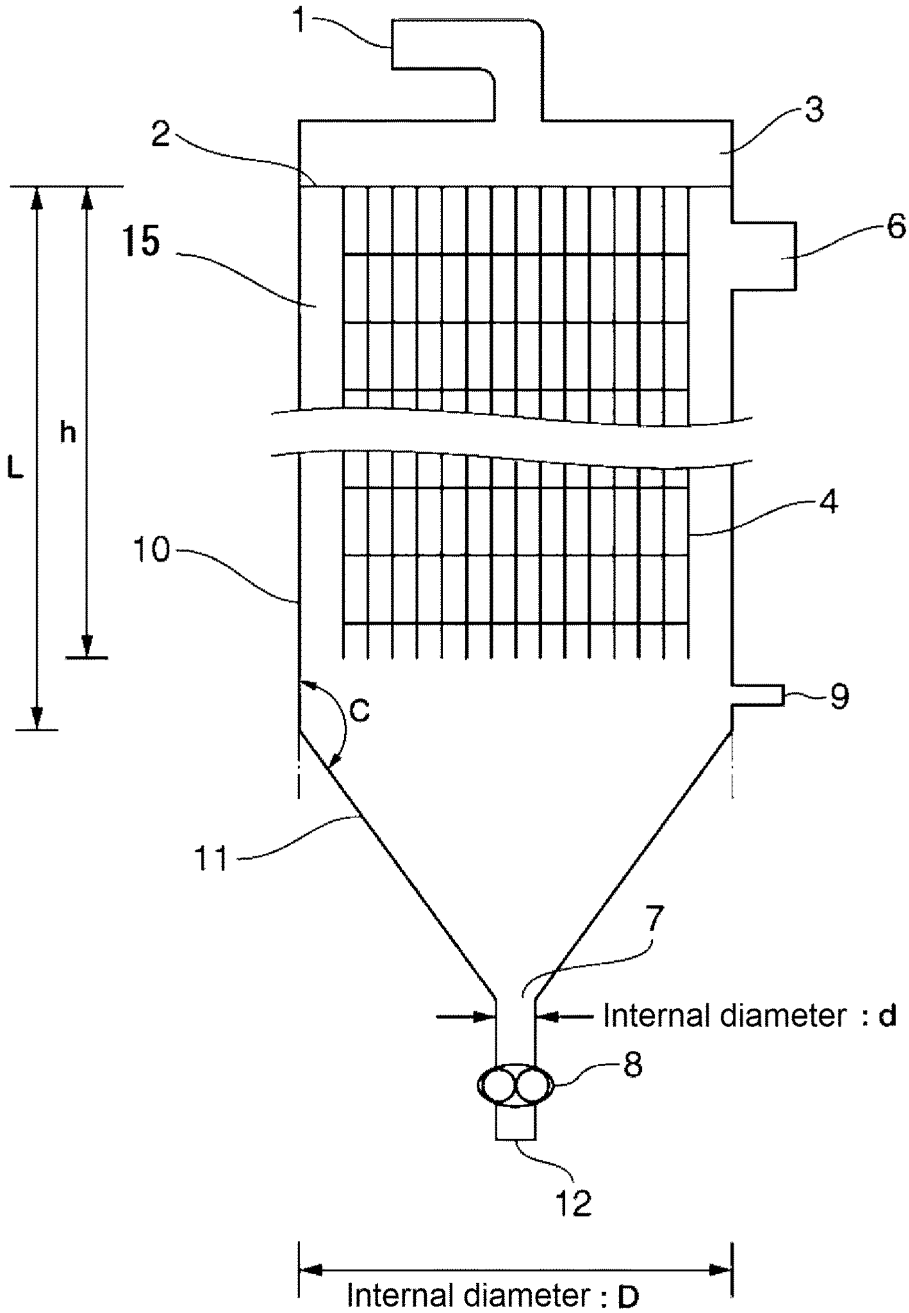
1
2
3
15
6
h
L
4
10
9
C
11
7
Internal diameter : d
8
12
Internal diameter : D

[Figure 2]

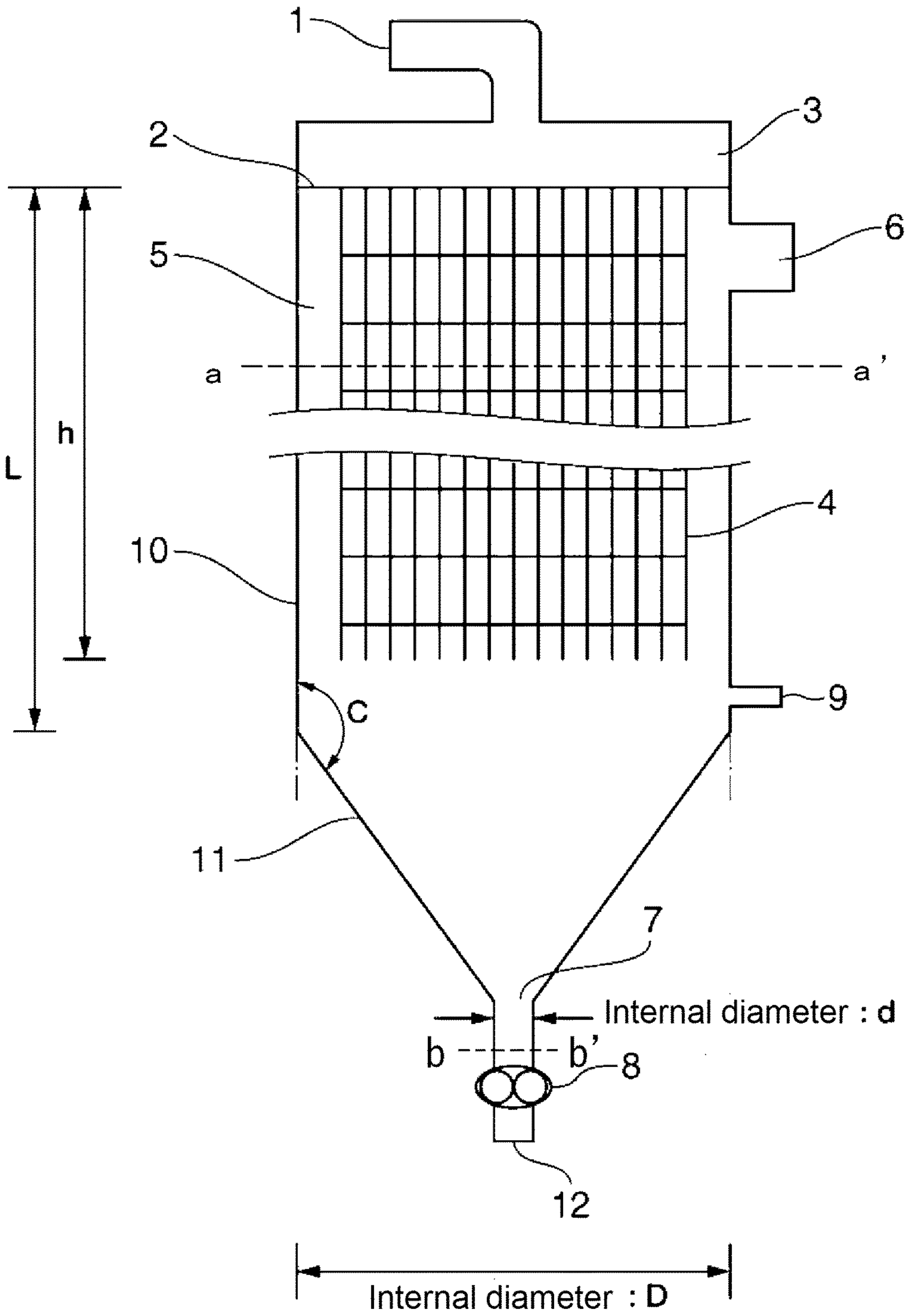
1
2
3
5
6
a
a'
L
h
4
10
c
9
11
7
Internal diameter : d
b
b'
8
12
Internal diameter : D

[Figure 3]

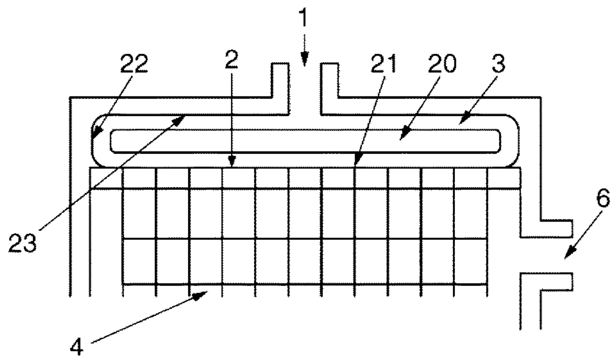


[Figure 4]

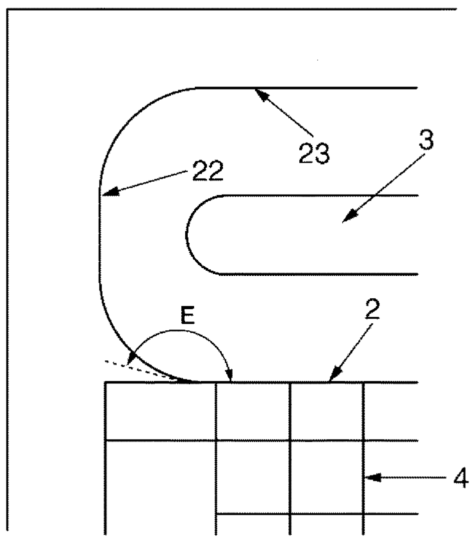

[Figure 5]

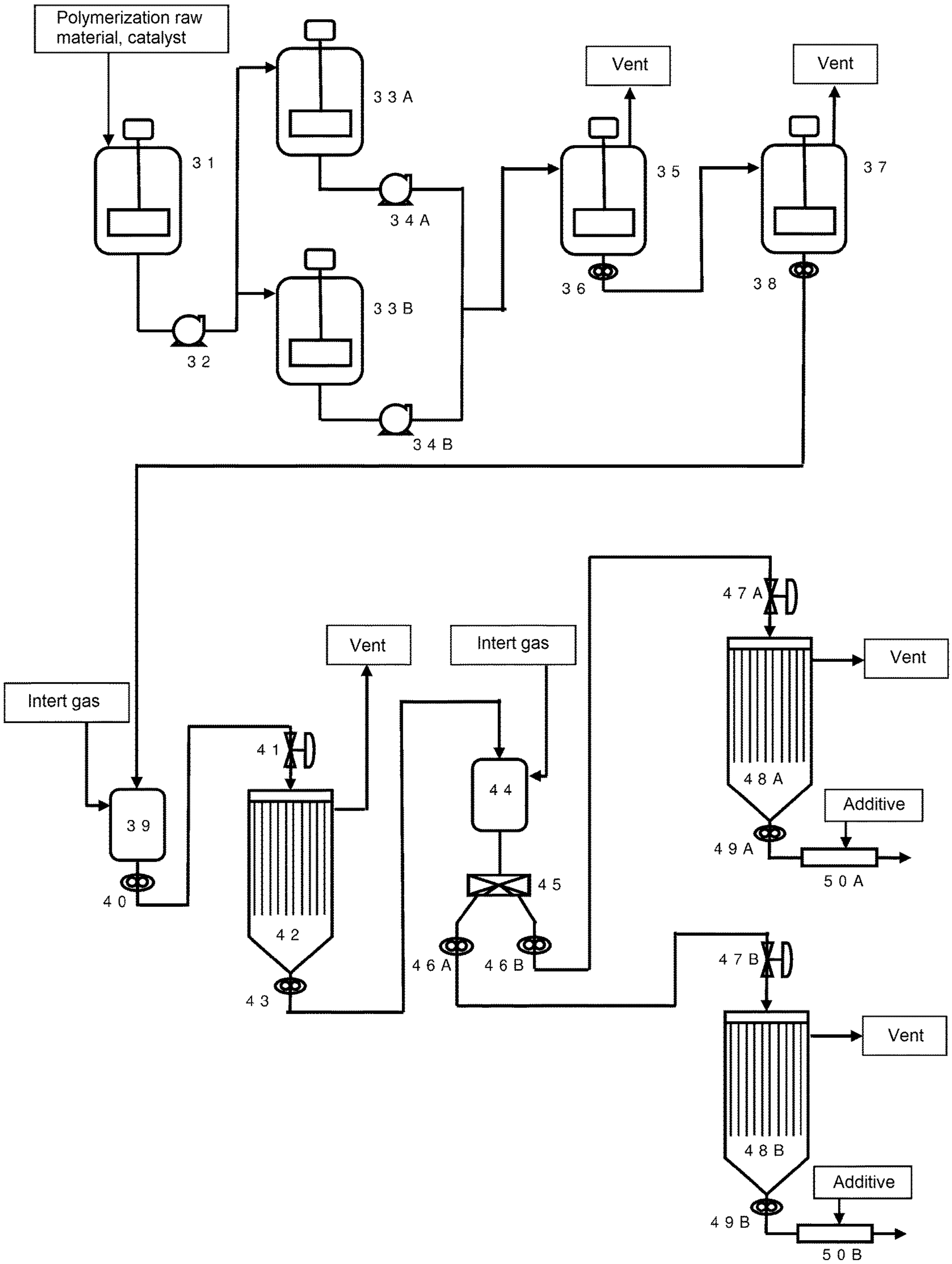
Polymerization raw material, catalyst
3 1
3 2
3 3 A
3 3 B
3 4 A
3 4 B
Vent
3 5
3 6
Vent
3 7
3 8
Intert gas
3 9
4 0
4 1
Vent
4 2
4 3
Intert gas
4 4
4 5
4 6 A
4 6 B
4 7 A
Vent
4 8 A
Additive
4 9 A
5 0 A
4 7 B
Vent
4 8 B
Additive
4 9 B
5 0 B

## INTERNATIONAL SEARCH REPORT

International application No.
**PCT/JP2022/008358**

**A. CLASSIFICATION OF SUBJECT MATTER**

***C08G 64/20***(2006.01)i
FI: C08G64/20

According to International Patent Classification (IPC) or to both national classification and IPC

**B. FIELDS SEARCHED**

Minimum documentation searched (classification system followed by classification symbols)

C08G64/20

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 11-335455 A (MITSUBISHI GAS CHEM. CO. INC.) 07 December 1999 (1999-12-07) claims, paragraphs [0001], [0005], [0012], [0013], [0032], [0035], [0036] | 2-4 |
| A | JP 2010-189581 A (MITSUBISHI CHEMICALS CORP.) 02 September 2010 (2010-09-02) entire text | 1-17 |
| A | WO 2013/147223 A1 (MITSUBISHI CHEMICALS CORP.) 03 October 2013 (2013-10-03) entire text | 1-17 |
| A | JP 6-136111 A (NIPPON G II PLAST. KK) 17 May 1994 (1994-05-17) entire text | 1-17 |
| A | JP 4-007328 A (DAICEL CHEM. IND., LTD.) 10 January 1992 (1992-01-10) entire text | 1-17 |
| A | WO 2006/067993 A1 (ASAHI KASEI CHEMICALS CORP.) 29 June 2006 (2006-06-29) entire text | 1-17 |

☑ Further documents are listed in the continuation of Box C.  ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **14 April 2022** | **26 April 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**

International application No.
**PCT/JP2022/008358**

**C. DOCUMENTS CONSIDERED TO BE RELEVANT**

| Category* | Citation of document, with indication, where appropriate, of the relevant passages | Relevant to claim No. |
|---|---|---|
| A | WO 2005/121211 A1 (ASAHI KASEI CHEMICALS CORP.) 22 December 2005 (2005-12-22)<br>entire text | 1-17 |
| A | WO 2015/141501 A1 (ASAHI KASEI CHEMICALS CORP.) 24 September 2015 (2015-09-24)<br>entire text | 1-17 |
| A | WO 2005/123805 A1 (ASAHI KASEI CHEMICALS CORP.) 29 December 2005 (2005-12-29)<br>entire text | 1-17 |

Form PCT/ISA/210 (second sheet) (January 2015)

**INTERNATIONAL SEARCH REPORT**

International application No.
**PCT/JP2022/008358**

**Box No. III Observations where unity of invention is lacking (Continuation of item 3 of first sheet)**

This International Searching Authority found multiple inventions in this international application, as follows:

Invention 1: Claim 1

Claim 1 has the special technical feature of a "method for assembling a polycarbonate production device having multiple device elements, the method comprising curing openings of the device elements, wherein each of the device elements has a metal surface to be in contact with an inner solution, at least a part of the metal surface is polished using a polisher corresponding to buff #400, and the polished metal surface is cleaned so that no stain sticks to a nonwoven fabric in a test wherein the metal surface is brought into contact with the nonwoven fabric, and connecting an opening of one of the device elements with an opening of another device element in a dust cover", and thus is classified as invention 1.

Invention 2: Claims 2-17

The invention as in claim 2 is not dependent on claim 1, and not an invention in the same category that includes all matters specifying the invention set forth in claim 1. In addition, the invention classified as invention 1 is not substantially identical to or similarly closely related to the invention in claim 2. Accordingly, the inventions in claim 2 and claims 3-17 dependent thereon are classified as invention 2.

1. ☑ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**

☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☑ No protest accompanied the payment of additional search fees.

**INTERNATIONAL SEARCH REPORT**
**Information on patent family members**

International application No.
**PCT/JP2022/008358**

| Patent document cited in search report | Publication date (day/month/year) | Patent family member(s) | Publication date (day/month/year) |
|---|---|---|---|
| JP 11-335455 A | 07 December 1999 | (Family: none) | |
| JP 2010-189581 A | 02 September 2010 | (Family: none) | |
| WO 2013/147223 A1 | 03 October 2013 | CN 104204032 A | |
| JP 6-136111 A | 17 May 1994 | (Family: none) | |
| JP 4-007328 A | 10 January 1992 | (Family: none) | |
| WO 2006/067993 A1 | 29 June 2006 | US 2008/0017325 A1<br>entire text<br>EP 1849509 A1<br>CN 101080260 A | |
| WO 2005/121211 A1 | 22 December 2005 | US 2008/0234444 A1<br>entire text<br>EP 1760107 A1<br>CN 1946762 A | |
| WO 2015/141501 A1 | 24 September 2015 | CN 105873980 A | |
| WO 2005/123805 A1 | 29 December 2005 | US 2007/0148055 A1<br>entire text<br>EP 1760108 A1<br>CN 1946760 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 4007328 A
- JP 3224434 B
- JP 4255548 B
- JP 6554012 B
- WO 2005121213 A
- WO 2006006585 A
- WO 2021053222 A


### Non-patent literature cited in the description


- Kagaku Souchi Sekkei (Chemical Apparatus Design in English). Kagaku Kogyo Co., Ltd, 15 March 1981, 49-54